(19) Europäisches Patentamt
European Patent Office
Office européen des brevets

(11) EP 0 804 035 B1

(12) EUROPEAN PATENT SPECIFICATION

(45) Date of publication and mention of the grant of the patent:
**26.06.2002 Bulletin 2002/26**

(51) Int Cl.$^7$: **H04N 7/26**, H04N 7/50

(21) Application number: **97106862.2**

(22) Date of filing: **25.04.1997**

(54) **Moving picture encoding apparatus and method**

Gerät und Verfahren zur Bewegtbildkodierung

Appareil et procédé de codage d'images animées

(84) Designated Contracting States:
**DE FR GB**

(30) Priority: **25.04.1996 JP 10507896**
**23.10.1996 JP 28050196**

(43) Date of publication of application:
**29.10.1997 Bulletin 1997/44**

(60) Divisional application:
**01127462.8 / 1 182 888**

(73) Proprietor: **MATSUSHITA ELECTRIC INDUSTRIAL CO., LTD.**
**Kadoma-shi, Osaka 571-0050 (JP)**

(72) Inventors:
- **Noboru, Katta**
**Hyougoken, 664 (JP)**
- **Kazuhiko, Nakamura**
**Hirakatashi, Osaka, 573 (JP)**

(74) Representative: **Kügele, Bernhard et al**
**Novagraaf SA**
**25, Avenue du Pailly**
**1220 Les Avanchets - Geneva (CH)**

(56) References cited:
**EP-A- 0 660 612**

- **KEESMAN G ET AL: "BIT-RATE CONTROL FOR MPEG ENCODERS" SIGNAL PROCESSING. IMAGE COMMUNICATION, vol. 6, no. 6, 1 February 1995, pages 545-560, XP000491860**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Technical Field

The present invention relates to a method and apparatus of digital compression encoding of image such as video signal, and more particularly to an apparatus and method of controlling the quantizing width when encoding and/or controlling the number of bits generated.

Background Art

Hitherto, as the transform format for compressing an image signal and converting into a digital code, an international standard format proposed in ISO/IEC 13818-2 (so-called MPEG2) has been known. A typical method of digital encoding of image signal conforming to this format is shown in Test Model 3 of ISO-IEC/JTC/SC29/WG11 No. 328. Fig. 1 is a block diagram of a typical MPEG2 video encoding apparatus. This MPEG2 video encoding apparatus comprises a frame converter 101 for shuffling input video signals into encoding sequence, a block converter 102 for converting picture data into encoding units called macro blocks, a subtractor 103 for determining the difference between an input macro block and a predicted value about its image data, a DCT (discrete cosine transform) 104, a quantizer 105, a variable length encoder 106, an inverse quantizer 107, an IDCT (inverse discrete cosine transform) 108, a motion compensation block 109, a mode discriminator 110, a motion detector 111, a quantizer control block 112, an encoder buffer 113, and an adder 114.

Prior to explanation of operation of thus constituted MPEG2 video encoding apparatus, the data structure of image for encoding is described by referring to Fig. 2.

Each picture of image to be encoded is divided into macro blocks and encoded. The picture is an image of frame or field unit, and unless otherwise noted, in the following description, the frame is called a picture. This macro block is a data area of $16 \times 16$ pixels, and the luminance and color difference signals are respectively encoded in a block of $8 \times 8$ each.

One data unit called a slice is composed of plural macro blocks, and one picture is composed of plural slices. The picture consists of I picture for encoding within the picture, P picture for predicting from past picture in time, and B picture for predicting from both past and future pictures in time. The picture configuration in Fig. 2 is a typical example, in which a P picture, three pictures ahead, is predicted by using a first I picture, and B pictures existing between them are predicted on both sides. Therefore, when encoding, it is necessary to encode the I picture in the first place, and P picture, then B pictures, which requires to convert the arrangement of images in the original time direction.

Furthermore, by plural pictures starting from I picture, a group of pictures (GOP) is composed, and one video sequence is composed of an arbitrary number of GOPs. Summing them up, the macro block is defined as an image segment, and the slice, picture, and GOP composed of plural macro blocks may be defined as image segment groups. Supposing the GOP to be an image segment group, for example, the picture which is a smaller image segment group may be defined as a sub-set of GOP or image segment group.

On the basis of such data structure, the operation of the MPEG2 video encoding apparatus in Fig. 1 is described below.

An input signal is fed into the frame converter 101, and the sequence of pictures of input image is converted. The output of the frame converter 101 is supplied into the block converter 102, and the block converter 102 divides the entered image into macro blocks of $16 \times 16$ pixels each, and supplies to the subtractor 103. In the subtractor 103, the predicted value obtained from the motion compensation block 109 is subtracted from the signal supplied from the block converter 102, and a predicted error is determined. The predicted error is transformed in the DCT 104 into each block of $8 \times 8$, and each transformed coefficient is quantized in the quantizer 105, and quantized data is created. The quantized data is encoded by variable length in the variable length encoder 106, and compressed encoded data is created. The compressed encoded data is, in order to be transmitted at a desired transmission rate, one stored in the encoder buffer 113, and is issued.

On the other hand, the data quantized in the quantizer 105 is reproduced in the inverse quantizer 107 and IDCT 108 in order to produce a predicted image. The reproduced image data is put into the motion compensation block 109, and a predicted value is calculated and supplied into the subtractor 103. The motion detector 111 calculates the motion vector in every macro block, and the motion vector is put into the motion compensation block 109, and is also supplied into the variable length encoder 106. The quantizer control block 112 compares the number of generated bits in the bit stream produced from the variable length encoder 106 and the target number of generated bits converted from the target bit rate, and controls the quantizing width of the quantizer 105 so that encoding may be finally completed at the target number of bits.

Processing in the quantizer control block 112 is described below. First, suppose the target number of bits per GOP converted from the target bit rate to be G, the number of bits left over in this GOP in the process of encoding to be R, the number of generated bits of the image of I, P, and B pictures encoded immediately before to be respectively SI, SP, SB, and the average of quantizing parameters at this time to be respectively QI, QP, QB. At this time, the difficulty in encoding of each picture XI, XP, XB is respectively defined as XI=SI × QI, XP=SP × QP, XB=SB × QB, and the target number of bits for encoding each picture is calculated as follows concerning I, P and B pictures.

$$TI=\frac{R}{1+\frac{NP \cdot XP}{XI \cdot Kp}+\frac{NB \cdot XB}{XI \cdot Kb}} \qquad (1)$$

$$TP=\frac{R}{NP+\frac{Kp \cdot NB \cdot XB}{XP \cdot Kb}} \qquad (2)$$

$$TB=\frac{R}{NP+\frac{Kb \cdot NP \cdot XB}{XB \cdot Kp}} \qquad (3)$$

where Kp, Kb are constants, and NP, NB are the numbers of remaining P pictures and B pictures not encoded yet. The value of R is updated at R = R-S, supposing the number of bits generated in the picture to be S, and is updated at R = R+G at the beginning of the GOP. That is, the number of bits generated per GOP is determined, bits are assigned and encoded depending on the composition ratio of each picture, and the number of generated bits is determined in each picture, and the value is subtracted from R, and the target number of generated bits is corrected and assigned in each picture again, and the same procedure continues. Moreover, when the number of bits required for encoding one GOP is different from the target number of bits assigned in the GOP, either one is assigned in the target number of generated bits in the next GOP.

The method of controlling the quantizing parameters from the target number of generated bits of each picture is described below. First, virtual buffers are assumed for I, P and B pictures, and supposing the target number of generated bits in each macro block to be constant when encoding an i-th macro block, the data remainders of the virtual buffers dIi, dPi, dBi are expressed as follows.

$$dIi=dI0+B_{i-1}-TI \times (i-1)/MB_cnt \qquad (4)$$

$$dPi=dP0+B_{i-1}-TP \times (i-1)/MB_cnt \qquad (5)$$

$$dBi=dB0+B_{i-1}-TB \times (i-1)/MB_cnt \qquad (6)$$

where Bi is the number of generated bits in all preceding macro blocks including i, MB_cnt is the number of macro blocks contained in one picture, and dI0, dP0, dB0 are initial values of buffer remainders at the beginning of each picture. In these formulas, the second term of the right side refers to the number of bits required to encode up to the immediately preceding macro block, and the third term expresses the target number of bits required to encode up to the immediately preceding macro block, and therefore by calculating the difference of the second term and third term, the error between the number of bits actually required for encoding and the target number of bits is obtained. By adding this error to the initial value of the buffer remainder, the buffer remainder for encoding the i-th macro block is obtained.

Using the buffer remainder calculated in the above formulas, the quantizing parameter Qi in the i-th macro block is obtained as follows.

$$Qi=di \times \frac{31}{r} \qquad (7)$$

where r = 2 × (target bit rate) / (picture rate).

Summing up the operation, regarding a target bit rate, the target number of generated bits is set in picture unit, and the number of generated bits is limited to the target number of bits in the GOP unit in which the picture is included. In each macro block, depending on the error between the actual number of generated bits and the target number of bits assumed that the number of generated bits to be constant, the quantizing parameter is controlled. As a result, the image is encoded so that the code generation amount may be close to the target number of generated bits of each picture.

In such encoding method, however, the number of generated bits is set in the picture unit, and the quantizing parameter is controlled so that the number of generated bits may coincide with the target number of generated bits in the GOP unit in which the picture is included, and therefore when the picture changes suddenly and the number of bits required for encoding increases, it is controlled to increase the quantizing width so as to suppress to the target number bits. As a result, the picture quality may deteriorate.

Or, if the actual number of generated bits increases extremely from the target number of generated bits in a certain GOP, it is controlled so that the target number of generated bits in next GOP may absorb this error, and when the picture quality in that GOP may deteriorate.

Yet, when relatively flat images are concentrated in a first half of a certain picture and complicated images are concentrated in a second half, it is ideal to assign more bits in the second half. In the above method, however, the target number of bits is uniformly assigned in each macro bit, and the quantizing parameter is set depending on the error from the number of bits required actually in each macro block, and hence there was a possibility of assignment of more bits in the first half and occurrence of more bits than expected in the second half. To the contrary, if complicated images are concentrated in the first half, the number of bits generated in the first half is limited, and bits are not assigned ideally.

To overcome such problems, it may be considered to encode once all images, determine the ideal bit distribution in all images, and encode again, but it is difficult to encode in real time.

The article "Bit-rate control for MPEG encoders" by Keesman G. et al., Signal Processing, Image Communication, vol.6, no.6, 1 February 1995, pages 545-560 describes a feedback bit-rate control for MPEG encoders using a PI-controller together with a bit-usage profile. The bit-usage profile indicates how the bits have to be spread out over the pictures and allows to reduce the number of unnecessary control actions. This control has a nearly constant bit-rate per group of pictures.

The document EP-A-0 660 612 describes an image encoding apparatus for preventing underflow and overflow of an image data buffer. Image information is quantized and variable-length encoding is performed thereon. After storing the encoded data in the buffer, the data is transmitted to the outside at a fixed data rate. At this time, a controller monitors a number of occupied bits in the buffer and when this number is not more than a threshold, the controller switches the output of the apparatus to a dummy data generator. At this time, a parameter which is used for rate control is initialised, and dummy data which can be eliminated on a decoding circuit are outputted form the dummy data generator. Furthermore, bit allocation is changed so that a sum of the number of occupied bits and the bit allocation to a frame which is determined before encoding does not exceed a fixed amount. When the number of occupied bits exceeds the fixed value, a quantization step size is changed to a grater value.

## Object of the Invention

It is hence an object of the invention to provide a moving picture encoding apparatus and method capable of distributing bits appropriately depending on the difficulty in encoding moving pictures.

It is a further different object of the invention to provide a moving picture encoding apparatus and method capable of controlling an optimum quantizing width on the basis of the target number of generated bits to be generated in one image segment group.

## Summary of the Invention

Thus, the present invention concerns a moving picture encoding apparatus and corresponding method as defined in the appended claims.

## Brief Description of the Drawings

Fig. 1 is a block diagram of an example of a general MPEG2 encoder.
Fig. 2 is a schematic diagram showing a picture configuration of MPEG2.
Fig. 3 is a block diagram showing a constitution of an example which is not an embodiment of the invention.
Fig. 4 is a block diagram showing a constitution of an example of a complexity detector 4 in Fig. 3.
Fig. 5 is a block diagram showing a constitution of an example of a quantizer control block 6 in Fig. 3.
Fig. 6 is flowchart showing a calculating method of quantizing parameter by a control unit 16 in Fig. 5.
Fig. 7 is a graph schematically showing a calculating method of quantizing parameter.

Fig. 8 is a flowchart explaining a calculating method of quantizing parameter in each picture.
Fig. 9 is a timing chart schematically explaining increase or decrease in the number of bits generated per GOP at advanced complexity of encoding.
Fig. 10 is a timing chart schematically explaining changes in the number of bits generated per GOP and picture quality in the case of an extended duration of information of advanced complexity of encoding.
Fig. 11 is a timing chart comparing the target number of bits generated per macro block and the number of generated bits between a conventional method and the method of the example which is not an embodiment of the invention.
Fig. 12 is a block diagram showing other example of determining complexity of encoding.
Fig. 13 is a block diagram showing a constitution of an embodiment of the invention.
Fig. 14 is a block diagram showing a constitution of an example of a quantizer control block 22 in Fig. 13.
Fig. 15 is a flowchart explaining a calculating method of quantizing parameter by a control unit 223 in Fig. 14.
Fig. 16 and Fig. 17 are flowcharts explaining further calculating methods of quantizing parameter by the control unit 223.
Fig. 18 is a timing chart explaining the correlation of the complexity of encoding of picture, number of generated bits, and picture quality.
Fig. 19 is a block diagram showing a constitution of an example of controlling a reaction coefficient T.
Fig. 20 is a timing chart showing an example of reaction coefficient T.

Detailed Description of the Embodiment of the Invention

Fig. 3 is a block diagram showing a constitution of an example which is not an embodiment of the invention of a moving picture encoding apparatus, in which the moving picture encoding apparatus of the invention comprises a frame converter 1, a frame delaying block 2, an encoding processor 3, a complexity detector 4 for analyzing the input image and calculating the difficulty in encoding, a motion detector 5, a quantizer control block 6, and an encoder buffer 7. The encoding processor 3 comprehensively includes the actions of the block converter 102, subtractor 103, DCT 104, quantizer 105, variable length encoder 106, inverse quantizer 107, IDCT 108, motion compensation block 109, mode discriminator 110, and adder 114 of the typical moving picture encoding apparatus shown in Fig. 1.

Input images are shuffled in the input image encoding sequence in the frame converter 1. The motion detector 5 calculates the motion vector for each macro block by comparison with each reference picture, as for P picture and B picture. This motion vector is sent into the encoding processor 3, and is used for creation of predicted image with motion compensation. The motion vector is also supplied to the complexity detector 4.

Fig. 4 is a block diagram showing a constitution of an example of the complexity detector 4. The complexity detector 4 comprises a predicted error image generator 8, a DCT 9, a variable length encoder 11, and a generated bit counter 12. The image data from the frame converter 1 is supplied into the predicted error image generator 8 together with motion vector signal. In the predicted error image generator 8, if the input image is an I picture, the image is held as it is, and in the case of a P picture, by the motion vector from the motion detector 5, a predicted error image is created by the difference between the predicted image and the input image. Similarly, in the case of a B picture, a predicted error image is created from predicted results on both sides.

In the DCT 9, successively, the image is transformed in each block, and is quantized in the quantizer 10, and is encoded in the variable length encoder 11. At this time, the quantizer 10 quantizes always with a constant quantizing parameter. The value of the quantizing parameter (q_scale) may be an arbitrary value, and herein quantizing is processed at q_scale=10 for the sake of convenience. The generated bit counter 12 detects the number of bits of the encoded data in every macro block, and multiplies by a fixed value of q_scale, and calculates complexity showing the difficulty in encoding in each macro block. The generated bit counter 12 sums up the complexity values of each macro block, and supplies the complexity per picture to the quantizer control block.

On the other hand, the input image is delayed by the portion of one picture in the frame delaying block 2, and is supplied into the encoding processor 3. The encoding processor 3 encodes same as the moving picture encoding apparatus shown in Fig. 1, according to the encoding parameter supplied from the quantizer control block 6, and generates a bit stream conforming to the MPEG standard.

The quantizer control block 6 determines the quantizing parameter q_scale on the basis of the number of generated bits of the bit stream from the encoding processor 3, the complexity from the complexity detector 4, and the target bit rate, and further determines the quantizing width when encoding in the encoding processor 3.

Fig. 5 shows a block diagram of a constitution of an example of the quantizer control block 6. The quantizer control block 6 comprises a generated bit counter 13 for counting the number of bits generated in the bit stream for the portion of one GOP generated by the encoding processor 3, a generated bit counter 14 for counting the number of generated bits for the portion of one picture, a generated bit counter 15 for counting the number of generated bits for the portion of one macro block, and a control unit 16. The control unit 16 generates the quantizing parameter q_scale in every macro block timing on the basis of the number of generated bits obtained from the generated bit counters 13, 14, 15, the target bit rate, maximum transmission rate Dec_R when sending a bit stream to the video decoder, and the complexity obtained from the complexity detector 4.

Fig. 6 is a flowchart showing an example of algorithm for calculating q_scale performed in the control unit 16.

First, at step S1, it is judged if a sequence end code is detected or not, and if not detected, the process goes to step S2. At step S2, when encoding a j-th GOP, the number of generated bits GOP_Bj-1 in the immediately preceding GOP is read out from the generated bit counter 13. It is, however, 0 in the first GOP. Next, at step S3, the error DIF_Gj between the number of generated bits immediately before encoding the j-th GOP and the target number of bits G calculated by supposing that all GOPs generate the same number of bits is calculated in the following formula.

$$DIF_Gj=DIF_G_{j-1}+GOP_B_{j-1}-G \qquad (8)$$

where Dif_G1 = 0. Incidentally, supposing the GOP to be composed of 15 frames of images, one GOP expresses a moving picture for 0.5 second, and hence, in this case, G is 1/2 of the target bit rate, that is, the bit rate transferred per second.

At next step S4, when encoding the j-th GOP, the target number of generated bits R(j) is calculated in the following formula.

$$R(j)=G-\frac{1}{T}\times DIF_Gj \qquad (9)$$

where T is a constant of 2 or more. This formula means that the error DIF_Gj between the number of bits generated in a certain GOP and a preset target number of bits G is not immediately absorbed by the target number of bits assigned in the next GOP, but is controlled to absorb part of the error DIF_Gj, that is, 1/T only. Since encoding is successively done in the sequential GOPs, in the adjusting process of target bit in each GOP, the error component is gradually absorbed in the target number of bits in the subsequent GOPs, so that sudden increase or decrease of the target number of bits is alleviated. As for the value of T, meanwhile, an effect may be expected at a numerical value of 2 or more, but considering to adjust the target number of bits for several seconds, if one GOP is composed of about 15 frames of images, a proper value is somewhere between 10 and 30. Of course, if adjusting the target number of bits for several minutes, a further larger value may be taken.

Once the target number of generated bits per GOP is determined, then, at step S5, temporary values of target number of generated bits per picture TTI, TTP, TTB are calculated in the following formulas.

$$TTI=\frac{XI}{XI+\frac{NP\cdot XP}{KP}+\frac{NB\cdot XB}{Kb}}\times R(j) \qquad (10)$$

$$TTP=\frac{XP}{XP+\frac{NP\cdot XP}{KP}+\frac{NB\cdot XB}{Kb}}\times R(j) \qquad (11)$$

$$TTB=\frac{XB}{XI+\frac{NP\cdot XP}{KP}+\frac{NB\cdot XB}{Kb}}\times R(j) \qquad (12)$$

where XI, XP, XB are predicted values of complexity of each picture, and their ratio is important herein. This value may be the complexity in the final I, P, B pictures of the immediately preceding GOP obtained from the complexity detector 4, or the fixed value, for example, XI:XP:XB = 160:60:42. Besides, NP, NB are number of P pictures and B pictures in the GOP. Values of Kp, Kb are constants for correction determined from the quantizing matrix, and herein Kp=1.0, Kb=1.4.

In I, P, B pictures, consequently at step S6, CI, CP, CB are set as the reference complexity of reference difficulty in encoding. Step S6, however, is skipped when the reference complexity is already read in and the target bit rate is not changed as a result of judging routine at step S8 and step S9, and the immediately preceding value is directly the set value. Setting the quantizing parameter q_scale at 10, the reference complexity is set at such a value that the number of bits generated when encoded by this quantizing parameter may be equal to the temporary values TTI, TTP, TTB of the target number of generated bits.

At next step S9, the average quantizing parameter q_pic is set when encoding so that the reference complexities CI, CP, CB may be the number of generated bits of TTI, TTP or TTB in the picture at that point.

At step S10, the target numbers of generated bits TI, TP, TB of the picture to be encoded are set. Using the complexity supplied from the complexity detector 4, the number of bits necessary when encoded at the set q_pic is set as TI, TP, TB.

At step S11, the quantizing parameter in the picture is controlled, and this step is further described below.

Finally at step S12, it is judged if the GOP end code has been detected or not, and if GOP end code is not detected, process from step S9 is repeated, and if GOP end code is detected, the process returns to step S1.

The process from determination of temporary target number of generated bits TTI, TTP, TTB (step S5) till determination of target number of generated bits TI, TP, TB (step S10) is described below while referring to the graph in Fig. 7.

In the graph in Fig. 7, the axis of abscissas denotes the complexity, indicating the difficulty in encoding, and the axis of ordinates represents the number of generated bits. When quantized at q_scale=10, the relation between complexity and number of generated bits is expressed by line a. In the first picture, the intersecting point of the temporary target number of generated bits TT0 per picture and line (a) is the reference complexity. The complexity in the next picture is detected by the complexity detector 4, and supposing the value to be CC0, the target number of generated bits of that picture is T0 as shown in the diagram. The target number of generated bits per picture is determined depending on the complexity obtained from the complexity detector 4, and the same operation is repeated until one GOP is completed.

When processing for one GOP is over, the target number of generated bits R(j) assigned to next GOP is determined by formula (9). Consequently, depending on the target number of generated bits for newly assigned GOP, the temporary target number of generated bits of each picture obtained in formulas (10) to (12) varies. At this time, supposing the temporary target number of generated bits to be TT1, a line (b) passing through the intersection of TT1 and reference complexity is newly drawn. When the complexity obtained from the complexity detector 4 is CC1, the target number of bits T1 at the intersection of line (b) and CC1 is the target number of bits of the picture at this moment.

Incidentally, the line in Fig. 7 has its upper limit and lower limit values. The upper limit value is determined in the following formula, supposing the data remainder in the reproduction side decoder buffer to be VBV_fullness, the initial value to be 1.8M bits as the buffer capacity of standard decoder, and the picture rate to be Pic_R:

$$\text{VBV_fullness}=\text{VBV_fullness}-\text{B_pic}+\frac{\text{Dec_R}}{\text{Pic_R}} \qquad (13)$$

where B_pic is the number of generated bits of the encoded picture detected by the generated bit counter 14, and Dec_R is the maximum rate to be entered in the decoder. Or the upper limit is the smallest one of the temporary values TTI, TTP, TTB of the target number of generated bits determined in formulas (10) to (12) and VBV_fullness.

On the other hand, the lower limit value of the line of q_scale is determined empirically so that the bit rate may not be less than 2 Mbps.

The detail of the control of q_scale in every macro block by quantizing parameter control in the picture at step S11 in the flowchart in Fig. 6 is described below.

Fig. 8 is a flowchart for explaining the quantizing parameter control process in the picture. Herein, the value of quantizing parameter q_scale in an i-th macro block is MQUANTi, the virtual buffer for rate control is defined, and the data remainder before encoding of the i-th macro block is supposed to be di. The initial value of di is determined in

$$\text{d0}=\text{q_pic}\times\frac{r}{31} \qquad (14)$$

where r is the reaction parameter, and herein it is defined as

$$r=2\times(\text{target number of generated bits of picture}) \qquad (15)$$

First at step S111, the complexity of the entire picture, C_pic, is read. At step S112, judging if first macro block or not, when judged to be first macro block, at step S113, MQUANTi, the value of quantizing parameter q_scale of the first macro block is set at q_pic, di=d0.

If not judged to be first macro block as a result at step S112, the data remainder di before encoding this macro block is determined in the following method.

First, at step S114, the number of bits generated in the immediately preceding macro block B_mb(i-1) is read from the generated bit counter 15. At next step S115, C_mb(i-1) is determined as the complexity of the immediately preceding macro block from the complexity detector 4, and the number of bits T_mb (i-1) predicted to be generated in the immediately preceding macro block is determined in the following formula.

$$T_mb(i-1)=\frac{C_mb(i-1)}{C_pic}\times T_pic \quad (16)$$

where T_pic is T1 in the case of I picture, TP in the case of P picture, or TB in the case of B picture. At step S116, di is determined in the following formula.

$$di=d(i-1)+B_MB(I-1)-T_MB(I-1) \quad (17)$$

At step S117, MQUANTi is determined in the following formula, and is supplied into the encoding processor 3.

$$MQUANTi=di\times\frac{31}{r} \quad (18)$$

Such setting of quantizing matrix in every macro block is repeated until the end of the picture according to the judging routine at step S118.

Summing them up, by the reference complexity in every picture calculated from the target bit rate, the temporary target numbers of generated bits TTI, TTP, TTB are determined, the target number of generated bits is corrected from the temporary value in the correlation between the reference complexity and the complexity in the picture at that point obtained from the complexity detector 4, and therefore the number of bits may be assigned accordingly if there is a scene change or a region of violent action in the picture, or when the complexity increases abruptly.

Besides, the error from the number of generated bit controlled depending on the complexity in every picture and the target generated bits is adjusted over plural GOPs, and the effect of bit distribution in a GOP immediately after a certain GOP is lessened.

For example, Fig. 9 schematically shows the changes of number of generated bits in GOP unit in the case of momentary increase of complexity in the image of a constant complexity. In Fig. 9(a), for a specific period, an image of a specific complexity continues, and the complexity suddenly increases at a certain point, and then an image of a specific complexity continues again. In the conventional assigning method of number of generated due to sudden change in complexity, extremely few bits are assigned. In this example, by contrast, it is understood that changes in the target number of generated bits in the GOP right after are small. That is, if the number of generated bits in a certain GOP is doubled, only 1/T of the error from the target number of generated bits of that GOP has an effect on the target generated bits of the next GOP. Supposing T=20, if one GOP is supposed to compose an image for 0.5 second, almost all bit rates are recovered to the target bit rate in 10 seconds.

Fig. 10 schematically shows the mode of deterioration of picture quality in terms of the number of bits generated in every GOP and the quantizing width when an image of constant complexity continues, and is succeeded by an image of relatively complicated and constant complexity, then succeeded by an image of the initial complexity. That is, when the complexity increases, the number of generated bits of GOP increases in order to maintain the picture quality, but it is corrected to the number of generated bits for maintaining the bit rate exponentially. At this time, the picture quality will not deteriorate suddenly, but it declines continuously for a period of several seconds. When returning to the initial complexity, the number of bits generated in the immediately succeeding GOP decreases, but it also returns to the optimum number of generated bits exponentially. At this time, the picture quality can be continuously recovered for a period of several seconds from the picture quality difficult in encoding.

Incidentally, it is also possible to control the picture quality continuously if the target bit rate is changed on the way of encoding. That is, if the target bit rate is decreased, the reference set value of complexity decreases also at the same rate. Therefore, if encoded at a target rate, the temporary target number of generated bits of next picture also decreases nearly in proportion to the target number of generated bits, and therefore the average quantizing parameter of the picture is nearly the same as in the case when the target number of generated bits is directly maintained, and it changes exponentially in the subsequent pictures.

Moreover, according to the example, since the quantizing width per macro block is also controlled depending on the complexity of each macro block in the picture, and therefore the error from the target bit rate is small, and the picture can be encoded in an appropriate bit distribution.

Fig. 11 schematically compares control of quantizing parameter by the conventional method and control of quantizing parameter in the embodiment. Fig. 11 (a) shows the actual number of generated bits and target number of generated bits in the conventional method, and Fig. 11 (b) shows the actual number of generated bits and target number of generated bits in the method of the invention.

When the target number of generated bits T in a certain picture is set, according to the conventional method, assuming the number of bits generated in each macro block to be uniform, the difference from the actual number of generated bits was defined as the data remainder of the virtual buffer, and the quantizing parameter was controlled accordingly. Therefore, in the image having the peak of complexity in the latter half of the image, the actual bit generation amount is small in the first half of the image, and hence the quantizing parameter decreases, so as to be encoded at higher picture quality than the initially demanded picture quality. In the latter half of the image, however, the bit generation amount increases, and finally the number of bits may be larger than the target number of generated bits, or the quantizing parameter may increase suddenly due to increase of the buffer remainder, which may lead to deterioration of picture quality.

On the other hand, according to the example, since the target number of generated bits in each macro block is set as in formula (16) depending on the complexity, the bit distribution is close to the complexity distribution in the picture, so that both picture quality and number of generated bits are close to the target.

In the example, the difference between the target bit rate and the number of generated bits is determined in the GOP unit, and the target number of generated bits is corrected, but it may be also done in the picture unit or other unit. That is, the macro block, the minimum value of the processing unit of encoding in this example, may be defined as an image segment, and a set of image segments, such as slice, picture and GOP may be defined as an image segment group, so that the target number of generated bits may be corrected in the unit of an arbitrary image segment group.

As for setting of reference value of complexity of encoding, not limited to setting by using q_scale=10, other quantizing parameter may be used, or if the target bit rate is not changed, a fixed value may be set from the beginning.

Instead of the complexity used for determining the parameters, other index may be used. For example, determining the square sum of average and error equivalent to activity of each picture, it may be replaced by the complexity in each formula. Fig. 12 is a block diagram for composing this example by using the activity. A predicted error image generator 17, same as in the constitution shown in Fig. 4, generates the I picture as it is, and P and B pictures from the predicted errors. An operation block 18 determines the square error of each macro block from the predicted error image from the predicted error image generator 17. The total is used as the substitute for the complexity of the entire picture.

In this example, the quantizer control block 6 is explained as a structure independent of the encoding processor 3, but when the encoding apparatus itself is composed of DSP (digital signal processor), it may be used commonly with a block for other processing.

An embodiment of the invention is described below. Fig. 13 is a block diagram showing a constitution of the embodiment of the invention, in which an input signal is supplied into an encoding processor 20. The encoding processor 20 encodes each macro block into a signal conforming to MEPG2 according to the value of quantizing width q_scale indicted by a quantizer control block 22, and supplies the encoded signal into an encoder buffer 21 and the quantizer control block 22. The encoding processor 20 also supplies the received GOP end timing signal and picture end timing signal to the quantizer control block 22. The quantizer control block 22 determines the quantizing width q_scale from the target bit rate, reaction coefficient T, and encoded data and timing signal supplied from the encoding processor 20, and supplies the quantizing width q_scale to the encoding processing 20, and controls the number of generated bits and picture quality.

Fig. 14 is a block diagram showing a constitution of an example of the quantizer control block 22 in Fig. 13, and the quantizer control block 22 includes a GOP counter 221 for counting the number of bits generated in every GOP, a picture counter 222 for counting the number of bits generated in every picture, and a control unit 223 for calculating q_scale. To the GOP counter 221 and picture counter 222, encoded data is supplied from the encoding processor 20, and the number of generated bits is counted. The control unit 223 detects the number of bits generated in every GOP or picture whenever receiving the GOP end timing signal and picture end timing signal, and calculates q_scale from the target bit rate (R) and reaction coefficient (T).

Fig. 15 is a flowchart for explaining an example of calculating method of q_scale by the quantizer control block 22.

First, as initial processing, at step S20, the error DIF_Gi between the target number of generated bits per GOP calculated from the target bit rate R (bps) and the present number of generated bits, reference value q_st of q_scale, and virtual buffer occupation capacity VBV_Buffer-fullness of the decoder are set. The minimum number of generated bits per picture D0 is set at 1,000,000 bits/picture rate, and the maximum number of generated bits D1 at 8,000,000 bits/picture rate. The set value of D0 is determined from the empirical rule that the picture quality drops significantly when the encoding rate becomes lower than 1 Mbps. On the other hand, the maximum value D1 may be matched with the data transmission rate capable of transmitting to the decoder by the reproducing apparatus, or may be set at an arbitrary value around, or below it.

At next step S21, q_scale of the picture to be encoded is calculated and issued according to the following formula.

$$q_scale = q_st \times \frac{R}{R - \frac{1}{T} \times DIF_Gi} \quad (19)$$

If, however, larger than the preceding q_scale by 2 or more, it should be the value larger than the preceding q_scale by 2. As evident from the formula, when DIF_Gi is equivalent to T times the target bit rate R, q_scale diverges infinitely, and indeed the upper limit of the error DIF_Gi is limited by the value of reaction coefficient T. That is, the reaction coefficient T is a parameter for determining the allowable range of the error DIF_Gi.

Also as clear from the formula, all quantizing parameters for encoding a certain picture can be obtained from the past ones. Q_scale obtained at step S21 is supplied to the encoding processor 20 at step S22.

At step S23, picture end timing is detected. When picture end timing is detected, at step S24, the number of bits generated in picture PIC_CNT is detected. On the basis of the result of detection, at step S25, the occupation capacity of virtual buffer is determined in the following formula.

$$VBV_Buffer_fullness = VBV_Buffer_fullness - PIC_CNT + R/(picture\ rate) \quad (20)$$

If, however, the right side exceeds the capacity of virtual buffer (fullness_MAX), it is determined as follows.

$$VBV_Buffer_fullness = fullness_MAX$$

At step S26, it is judged if VBV_Buffer_fullness is below the lower limit D2 of the buffer occupation capacity of the reproducing side decoder or not, and if below the lower limit D2, a picture skip processing signal is issued at step S27 to avoid underflow.

At step S27, PIC_CNT is judged to be below the lower limit D0 or not, and when PIC_CNT is smaller than the lower limit D0, at step S28, q_scale is decreased so that the number of bits may not be smaller than the lower limit in the subsequent pictures. Fig. 16 is a flowchart for explaining the operation for setting q_scale to be used in next picture when the number of bits generated per picture is below the lower limit D0. Usually, q_scale is decreased by one each, but if PIC_CNT is significantly smaller than the lower limit, for example, if less than 1/2 of the lower limit D0, the decreasing width is varied depending on q_scale at that time. Generally, in the encoding process in a certain picture, the product of the q-scale value and number of generated bits, that is, complexity is said to be almost constant. That is, when q_scale is half, the number of generated bits is doubled. When a relatively large value is assigned for q_scale, to control the number of generated bits by varying the value, it is understood that the changing amount must be larger as compared with the case of a smaller q_scale value.

Among I, P, B pictures, it is the B picture that has a strong tendency of the number of generated bits being smaller than the lower limit D0, and when the quantizing width is controlled from the number of generated bits of the B picture, the increase or decrease in the number of generated bits in other pictures is significant. Accordingly, by setting q_scale to such an extent that the error from the lower limit D0 may be recovered to about half, the changing amount is set to a degree so that the number of generated bits may reach the lower limits in several pictures. In the flowchart in Fig. 16, first at step S281, it is judged if PIC_CNT is smaller than ½ of the lower limit D0, and if smaller, q_scale is subtracted by the value corresponding to the preceding value. That is, at step S282, if the preceding q_scale exceeds 9, 3 is subtracted at step S283. At step S284, if the preceding q_scale is judged to be 6 or more to 9 or less, 2 is subtracted at step S285. In the case of a further smaller q_scale, it is judged if q_scale is larger than 1 or not at step S286, and if the result is TRUE, 1 is subtracted from the preceding q_scale at step S287.

On the other hand, if PIC_CNT is not smaller than 1/2 of the lower limit D0, at step S289, 1 is subtracted from the preceding q_scale, but if q_scale is judged to be 1 or less at step S288, subtraction is not processed.

Thus, if the number of bits generated in picture PIC_CNT as the sub-set of image segment is smaller than the specified lower limit, the quantizing parameter is subtracted depending on the difference from the lower limit.

Back to Fig. 15, it is judged whether PIC_CNT is over the upper limit D1 or not at step S29, and if PIC_CNT exceeds the upper limit D1, q_scale is increased at step S30 to control the generated code amount so as not to exceed the upper limit. The process of increasing q_scale is shown in Fig. 17. That is, at step S301, if it is judged that PIC_CNT is more than twice of D1, at step S302, it is judged if the preceding q_scale is over 9 or not, and if the result is TRUE, at step S303, 4 is added to the preceeding q_scale. Or, by the processing of S302, if it is judged that q_scale is smaller than 9, at step S304, 2 is added to the preceding q_scale. On the other hand, if PIC_CNT is judged to be smaller than twice of the upper limit D1 as a result of judgement at step S301, it is judged at step S305 whether the preceding q_scale is smaller than 31 or not. If the preceding q_scale is smaller than 31, at step S306, 1 is added to the preceding q_scale, and otherwise the same preceding value is set in q_scale value. Thus, the changing amount varies depending on the value of the preceding q_scale because a large changing amount is needed if the quantizing width is large. Besides, in the case of I picture or scene change, the number of generated bits may temporarily exceeds the upper limit, and hence the value of q_scale is changed so that the number of generated bits may settle within the upper limit in several pictures.

In this way, when the number of bits generated in picture PIC_CNT as the sub-set of image segment is larger than the specified upper limit, the quantizing parameter is increased depending on the difference from the specified upper limit.

Again back to Fig. 15, at step S31, whether GOP end timing or not is judged, and if not GOP end, the control job of q_scale for controlling the number of generated bits between lower limit and upper limit is repeated in every picture. When receiving GOP end timing, the number of bits generated in GOP GOP_CNT is detected at step S32, and the error DIF_Gi from the present number of generated bits is calculated in the following formula at step S33.

$$\text{DIF_Gi}=\text{DIF_Gi}+\text{GOP_CNT}-\frac{R}{(\text{number of GOPs per second})} \qquad (21)$$

On the basis of result of this calculation, back to the beginning process of GOP, the beginning q_scale of next GOP is calculated. This series of operation is repeated until encoding is over.

What is characteristic of the processing mentioned so far is that, as compared with the example in which the complexity of the picture to be encoded must be detected from the complexity detector 4, the change of q_scale, in the embodiment, is determined by comparison between the number of bits generated in the sub-set of the image segment encoded immediately before with the upper limit or lower limit, so that the moving picture encoding apparatus more suited to real time processing may be specified.

The picture skip signal issued by the control unit 223 in Fig. 14 is supplied to the encoding processor 20 in order to prevent underflow of virtual buffer. The encoding processor 20 receiving the picture skip signal skips encoding for the portion of one picture.

Fig. 18 is a graph schematically showing changes in the number of bits generated in relation to the complexity of input image and the picture quality. Fig. 18 (a) shows the changes of complexity occurring in a sufficiently short time for the reaction coefficient T, and changes of the number of generated bits and picture quality according to the example. That is, if the complexity of image changes in a relatively short time interval, the number of generated bits is assigned depending on the complexity of encoding of image, and it is understood that the picture quality is kept almost constant.

On the other hand, as shown in Fig. 18 (b), when encoding of input image is extremely difficult and such signal lasting relatively for a long time is supplied, according to the assigning method of the target number of bits of the first embodiment, the number of bits is generated depending on the complexity of input image, and later the bit generation amount decreases exponentially with the reaction coefficient T as parameter. Accordingly, the number of bits becomes lower than relatively soon than the number of bits necessary for maintaining a sufficient picture quality and the interval to maintain a sufficient picture quality is short. By the assigning method of target number of bits of the embodiment, the image interval requiring bit generation over the maximum bit quantity is encoded quickly by a smaller number of bits than the maximum bit quantity, and a sufficient picture quality is maintained for a long period.

Fig. 18 (c) is a graph schematically expressing the relation between the number of generated bits and the picture quality in the case of a long duration of image of high complexity followed by a long duration of image of low complexity. According to the example which is not an embodiment of the invention, right after changing over to an image of low complexity, the number of generated bits decreases extremely, and then the number of generated bits increases exponentially by the reaction coefficient T. For recovery of picture quality, however, the period determined by the reaction coefficient T is required. In the embodiment of the invention, by contrast, the number of generated bits reaches the lower limit quickly, and a fair picture quality is maintained.

In the embodiment, too, the error between the target bit rate and big generation is calculated in the GOP unit, but instead of the GOP unit, the bit generation error may be also calculated in the unit of several pictures.

The changing amount of q_scale in every picture can be also set arbitrarily so that the number of bits generated per picture may be controlled between the upper limit and lower limit.

The reaction coefficient T is explained as a fixed value in the example and the embodiment, but it can be also changed arbitrarily. That is, the reaction coefficient is set so as to absorb the error occurring in a certain GOP between the number of generated bits and the target number of generated bits over T GOPs to follow, and therefore a preferred reaction coefficient T should be set depending on the actual system. For example, it is preferred to determine the reaction coefficient T depending on the total number of GOPs to be encoded, or the reaction coefficient may be changed nonlinearly depending on the time in the case of a limited reproduction time such as optical disk.

Fig. 19 is a block diagram showing a constitution of an example of variable control of reaction coefficient T depending on the time, in which a reaction coefficient control block 23 issues a reaction coefficient T by receiving the encoding time of the image to be encoded, and the time on the basis of start of encoding of the presently encoded portion. Fig. 20 is a graph showing the input and output characteristics of the reaction coefficient control block 23. In this embodiment, as clear from formula (19), when the bit generation error becomes T times the bit rate, the quantizing width is infinite in numerical formula, and hence the upper limit of bit generation is guaranteed. That is, the reaction coefficient T is a parameter for determining the upper limit of the error allowable against the target rate in the actual system. On the other hand, the larger the reaction coefficient T, it is applicable to the longer interval such as scene change, and a desired operation is realized when a larger reaction coefficient is given. For example, the reaction coefficient T is set at a large value in the first half of encoding, and is decreased gradually at the end of encoding so as to be a smaller value. In this way, the final error of number of generated bits is guaranteed relatively small in the finally set value of T, and in the intermediate portion of encoding, the reaction coefficient T is set large, and it is applicable to a scene of a relatively long time. Fig. 20 is a graph showing the changes of reaction coefficient T. Herein, supposing the encoding completion time to be C, the intermediate 1/3 period is T=180, and in the first 1/3, T is gradually changed from T=20 to T=180, and in the final 1/3, T is gradually changed from T=180 to T=20. In this way, since the reaction coefficient T is large in the intermediate portion of encoding, the error in the number of generated bits can be adjusted in a short time in the first and final portions. This is particularly effective when the beginning and end of the picture to be coded are easily encoded scenes such as the title and ending of a movie, and in the body of the movie, since the reaction coefficient T can be set large, the video source of excellent picture quality can be presented.

In Fig. 20, incidentally, the decrease starting time of reaction coefficient T is the time of 2/3 of the encoding time, but when scenes of relatively low complexity in encoding are expected, such as the title and the cast at the ending of a moving, the reaction coefficient decrease time may be set immediately before end of encoding, so that the reaction coefficient can bet set large in almost all range of the movie, so that a high picture quality is realized.

The value of T is set between 20 and 180, but it is not limited. For example, if T is about 5, it is effective to maintain the picture quality sufficiently in the scene change in which the picture quality was lowered in conventional encoding of fixed rate, and encoding of high picture quality is possible by increasing the reaction coefficient as much as possible as the error of number of generated bits may be allowed.

Furthermore, in the embodiment, the changing amount of the q_scale value when the bit generation per picture has exceeded the upper limit or lower limit is controlled to be within the range of upper limit or lower limit in several frames later, assuming the images of same complexity continue, but it may be also determined by calculation so as to set q_scale also to 1/2 when, for example, the lower limit of the number of generated bits becomes 1/2, and the changing amount is arbitrary as far as the quantizing width is controlled so as to settle the number of bits generated per picture between the upper limit and lower limit.

Thus according to the invention, the quantizing parameter is set so as to absorb the error between the target number of generated bits in image segment group such as GOP unit and the number of generated bits gradually to the target number of bits assigned in the plural succeeding image segment groups, and therefore it is possible to avoid sudden picture quality changes if the images are changed abruptly.

Also according to the invention, if the number of generated bits in the sub-set of image segment such as the preceding picture is outside the range specified by the upper limit and lower limit, the quantizing parameter in the sub-set in the next image segment is changed, and therefore it is possible to control the target number of bits generated and the quantizing parameter without preliminarily detecting the number of generated bits necessary for encoding of the image unit.

Various changes and modifications of the foregoing embodiments are possible so far as not departing from the scope of the invention.

## Claims

1. A moving picture encoding apparatus for compressing and encoding a picture depending on a target bit rate, comprising a control unit (223) for setting a quantizing parameter depending on the error between the target number of bits corresponding to the target bit rate and the number of generated bits required for encoding the immediately preceding image segment group, a reaction coefficient T for determining the allowable range of the error, and the quantizing parameter used for encoding the immediately preceding image segment group.

2. A moving picture encoding apparatus of claim 1, wherein the control unit (223) sets the quantizing parameter in the maximum value when the error is near the allowable range of the error determined by the reaction coefficient T.

3. A moving picture encoding apparatus of claim 1, wherein the control unit (223) sets the quantizing parameter depending on the ratio of the difference of subtracting the result of dividing the error by the reaction coefficient T from the target bit rate, to the target bit rate.

4. A moving picture encoding method for compressing and encoding a picture depending on a target bit rate, **characterized by** setting the quantizing parameter depending on the error between the target number of bits corresponding to the target bit rate and the number of generated bits required for encoding the immediately preceding image segment group, a reaction coefficient T for determining the allowable range of the error, and the quantizing parameter used for encoding the immediately preceding image segment group.

5. A moving picture encoding method of claim 4, **characterized by** setting the quantizing parameter in the maximum value when the error is near the allowable range of the error determined by the reaction coefficient T.

6. A moving picture encoding method of claim 4, **characterized by** setting the quantizing parameter depending on the ratio of the difference of subtracting the result of dividing the error by the reaction coefficient T from the target bit rate, to the target bit rate.

**Patentansprüche**

1. Bewegtbildkodierungsgerät zur zielbitratenabhängigen Komprimierung und Kodierung eines Bildes mit einer Steuereinheit (223) zur Festlegung eines Quantisierungsparameters in Abhängigkeit von der Abweichung zwischen der der Zielbitrate entsprechenden Zielbitzahl und der Zahl der zur Kodierung der unmittelbar vorausgehenden Bildsegmentgruppe erforderlichen, erzeugten Bits, von einem Reaktionskoeffizienten T zur Bestimmung des zulässigen Abweichungsbereichs und von dem für die Kodierung der unmittelbar vorausgehenden Bildsegmentgruppe benutzten Quantisierungsparameter.

2. Bewegtbildkodierungsgerät des Anspruchs 1, worin die Steuereinheit (223) den Quantisierungsparameter auf den Höchstwert festlegt, wenn die Abweichung nahe bei dem durch den Reaktionskoeffizienten T bestimmten, zulässigen Abweichungsbereich liegt.

3. Bewegtbildkodierungsgerät des Anspruchs 1, worin die Steuereinheit (223) den Quantisierungsparameter in Abhängigkeit vom Verhältnis der Differenz zwischen Zielbitrate und dem Quotienten aus der Abweichung und dem Reaktionskoeffizienten T zur Zielbitrate festlegt.

4. Bewegtbildkodierungsverfahren zur zielbitratenabhängigen Komprimierung und Kodierung eines Bildes, **dadurch gekennzeichnet, dass** der Quantisierungsparameter in Abhängigkeit von der Abweichung zwischen der der Zielbitrate entsprechenden Zielbitzahl und der Zahl der zur Kodierung der unmittelbar vorausgehenden Bildsegmentgruppe erforderlichen, erzeugten Bits, von einem Reaktionskoeffizienten T zur Bestimmung des zulässigen Abweichungsbereichs und von dem für die Kodierung der unmittelbar vorausgehenden Bildsegmentgruppe benutzten Quantisierungsparameter festgelegt wird.

5. Bewegtbildkodierungsverfahren des Anspruchs 4, **dadurch gekennzeichnet, dass** der Quantisierungsparameter auf den Höchstwert festgelegt wird, wenn die Abweichung nahe bei dem durch den Reaktionskoeffizienten T bestimmten, zulässigen Abweichungsbereich liegt.

6. Bewegtbildkodierungsverfahren des Anspruchs 4, worin der Quantisierungsparameter in Abhängigkeit vom Verhältnis der Differenz zwischen Zielbitrate und dem Quotienten aus der Abweichung und dem Reaktionskoeffizienten T zur Zielbitrate festgelegt wird.

**Revendications**

1. Dispositif de codage d'images animées destiné à compresser et à coder une image suivant un débit binaire cible, comprenant une unité de commande (223) destinée à établir un paramètre de quantification suivant l'erreur entre le nombre de bits cible correspondant au débit binaire cible et le nombre de bits générés nécessaire au codage du groupe de segments d'image immédiatement précédent, un coefficient de réaction T destiné à déterminer la plage admissible de l'erreur, et le paramètre de quantification utilisé pour le codage du groupe de segments d'image immédiatement précédent.

2. Dispositif de codage d'images animées selon la revendication 1, dans lequel l'unité de commande (223) établit le paramètre de quantification à la valeur maximum lorsque l'erreur est proche de la plage admissible de l'erreur déterminée par le coefficient de réaction T.

3. Dispositif de codage d'images animées selon la revendication 1, dans lequel l'unité de commande (223) établit le paramètre de quantification suivant le rapport de la différence de la soustraction du résultat de la division de l'erreur par le coefficient de réaction T du débit binaire cible, sur le débit binaire cible.

4. Procédé de codage d'images animées destiné à compresser et à coder une image suivant un débit binaire cible, **caractérisé par** l'établissement du paramètre de quantification en fonction de l'erreur entre le nombre de bits cible correspondant au débit binaire cible et le nombre de bits générés requis pour coder le groupe de segments d'image immédiatement précédent, un coefficient de réaction T destiné à déterminer la plage admissible de l'erreur, et le paramètre de quantification utilisé pour le codage du groupe de segments d'image immédiatement précédent.

5. Procédé de codage d'images animées selon la revendication 4, **caractérisé par** l'établissement du paramètre de quantification à la valeur maximum lorsque l'erreur est proche de la plage admissible de l'erreur déterminée par le coefficient de réaction T.

6. Procédé de codage d'images animées selon la revendication 4, **caractérisé par** l'établissement du paramètre de quantification en fonction du rapport de la différence de la soustraction du résultat de la division de l'erreur par le coefficient de réaction T du débit binaire cible, sur le débit binaire cible.

Fig. 1

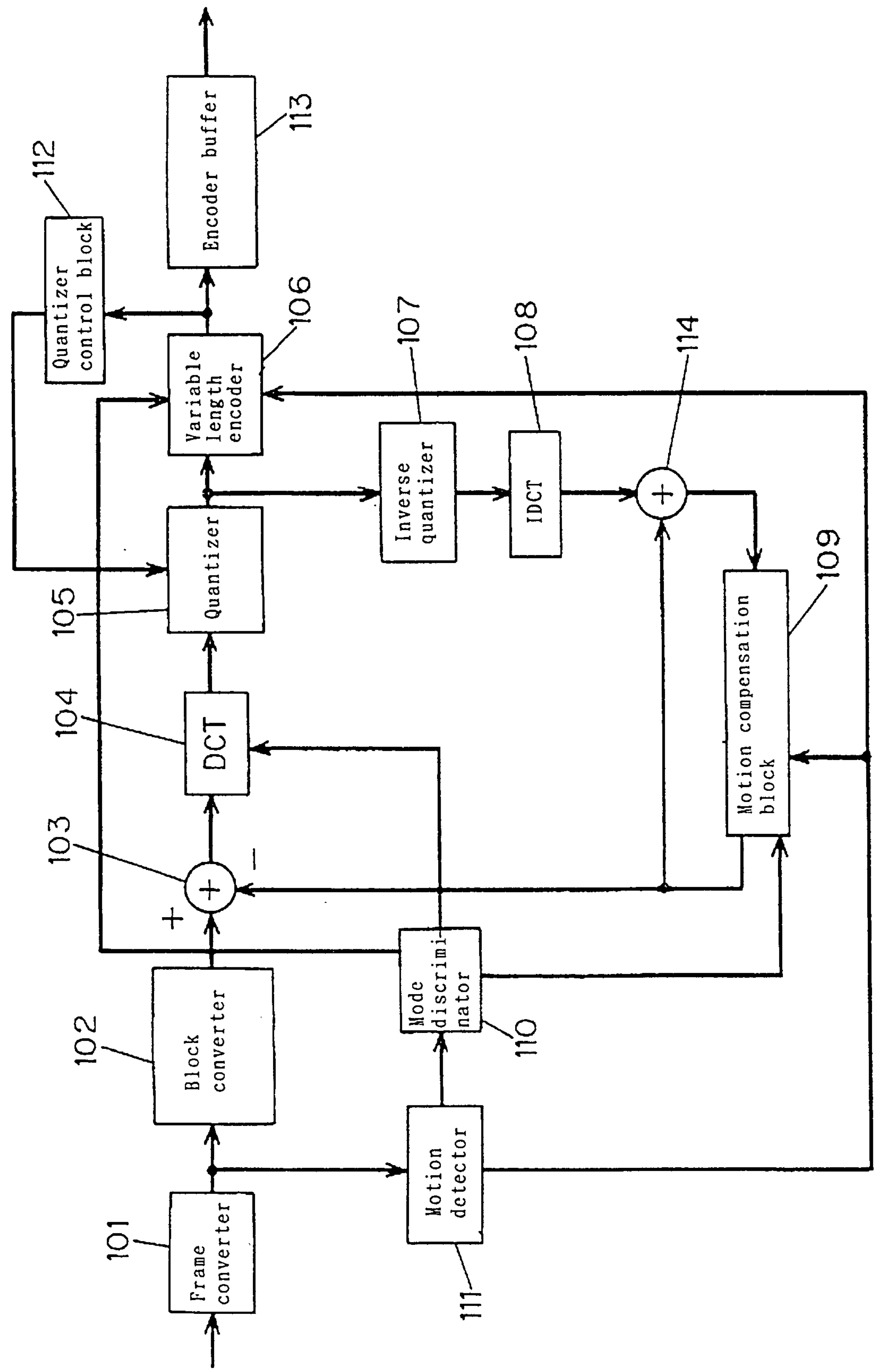
Frame converter
101
Block converter
102
103
+
−
DCT
104
Quantizer
105
Variable length encoder
106
Inverse quantizer
107
IDCT
108
Motion compensation block
109
Mode discriminator
110
Motion detector
111
Quantizer control block
112
Encoder buffer
113
114

Fig. 2

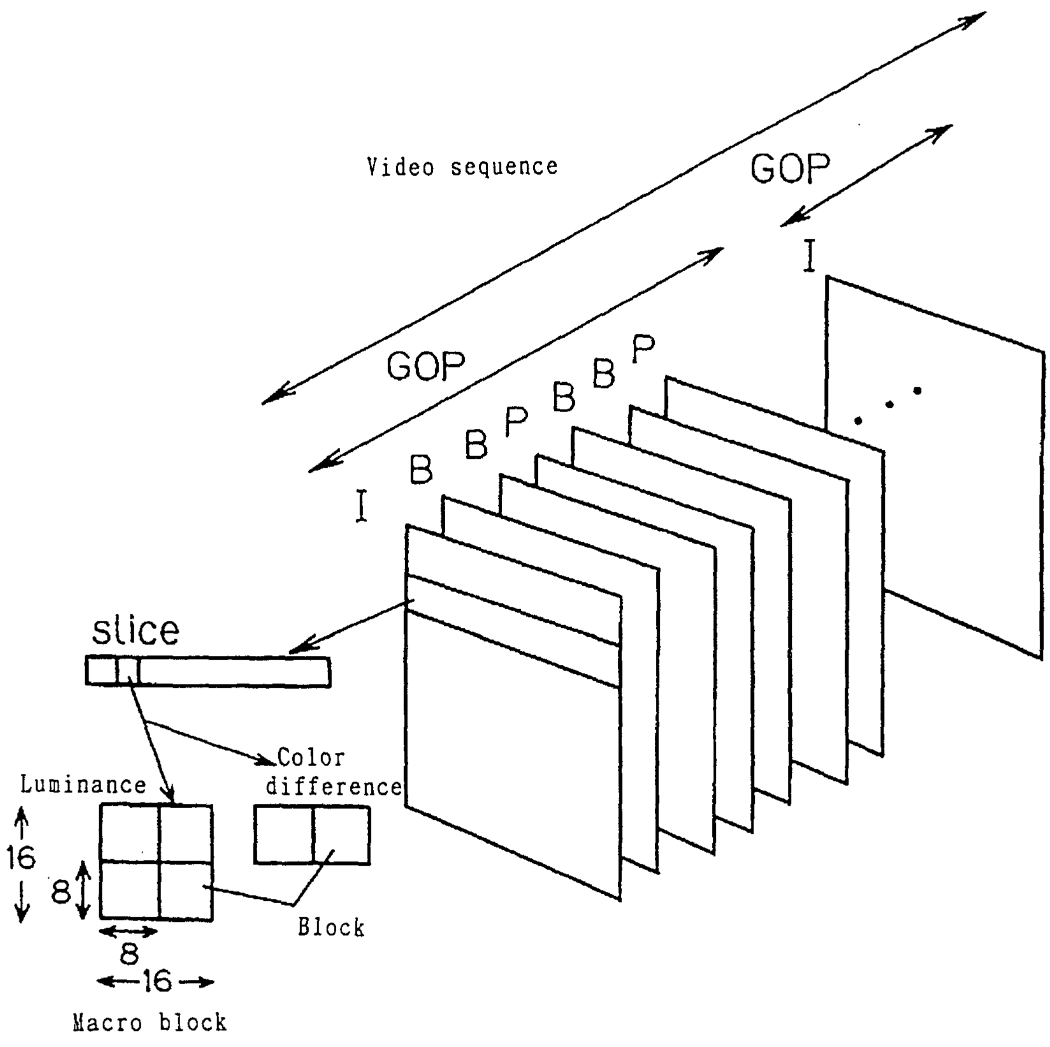
Video sequence
GOP
GOP
I
B
B
P
B
B
P
I
slice
Luminance
Color difference
16
8
8
16
Block
Macro block

Fig. 3

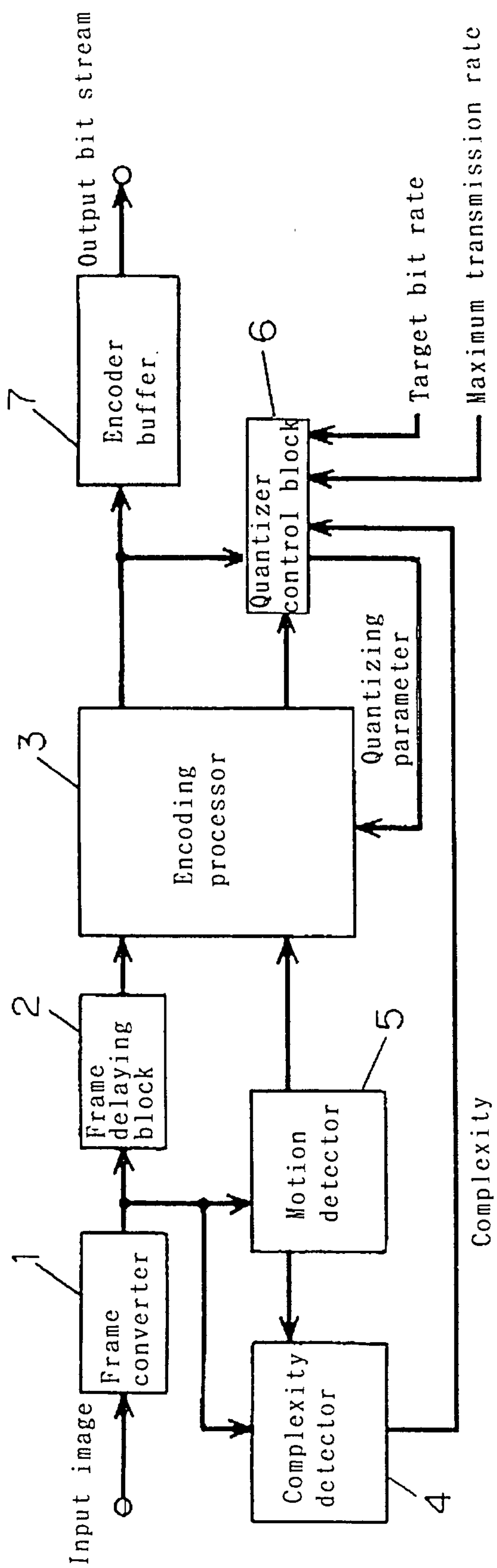
Input image
Frame converter
1
Frame delaying block
2
Encoding processor
3
Encoder buffer
7
Output bit stream
Motion detector
5
Complexity detector
4
Quantizer control block
6
Quantizing parameter
Complexity
Target bit rate
Maximum transmission rate

Fig. 4

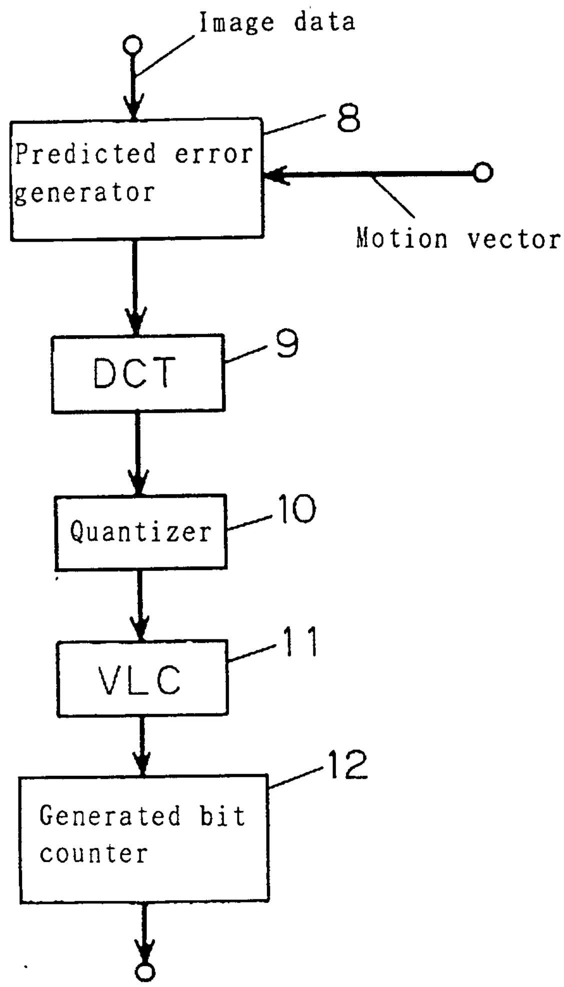
Image data
8
Predicted error generator
Motion vector
DCT
9
Quantizer
10
VLC
11
12
Generated bit counter

Fig. 5

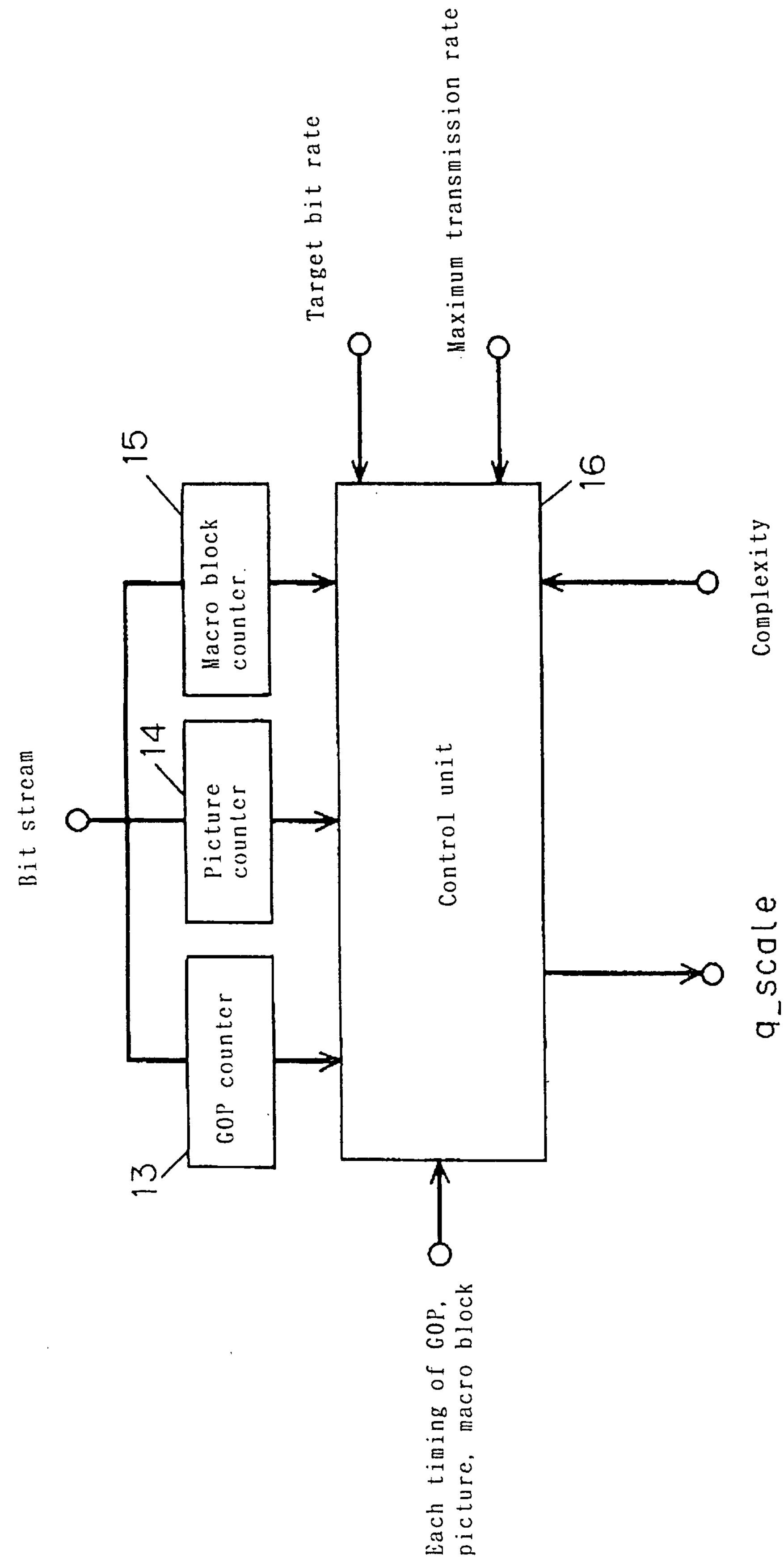

Target bit rate
Maximum transmission rate
15
16
Macro block counter
14
Picture counter
13
GOP counter
Bit stream
Control unit
Complexity
q_scale
Each timing of GOP, picture, macro block

Fig. 6

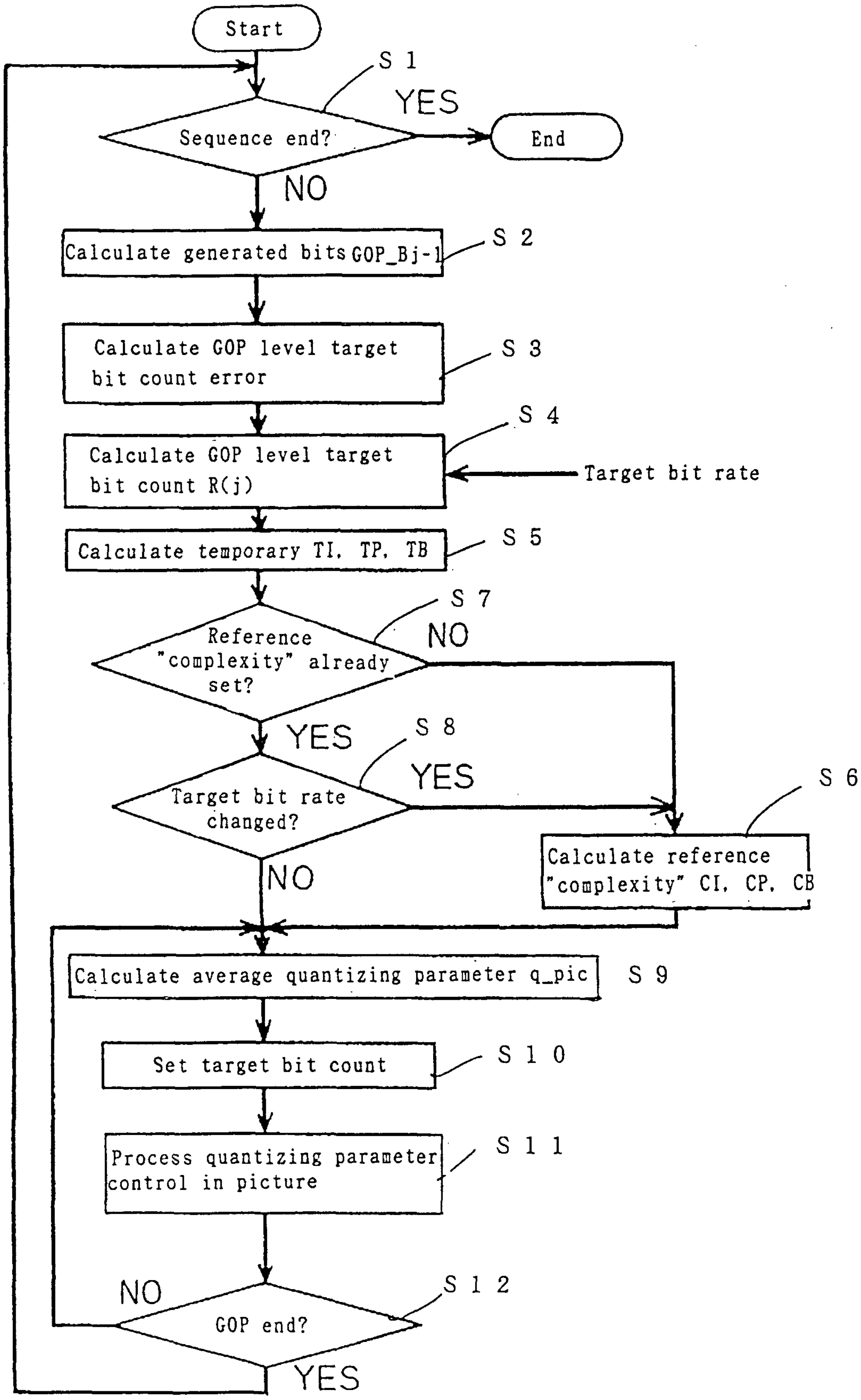
Start
S 1
Sequence end?
YES
End
NO
Calculate generated bits GOP_Bj-1
S 2
Calculate GOP level target bit count error
S 3
S 4
Calculate GOP level target bit count R(j)
Target bit rate
Calculate temporary TI, TP, TB
S 5
S 7
NO
Reference "complexity" already set?
YES
S 8
YES
Target bit rate changed?
S 6
NO
Calculate reference "complexity" CI, CP, CB
Calculate average quantizing parameter q_pic
S 9
Set target bit count
S 1 0
Process quantizing parameter control in picture
S 1 1
NO
S 1 2
GOP end?
YES

Fig. 7

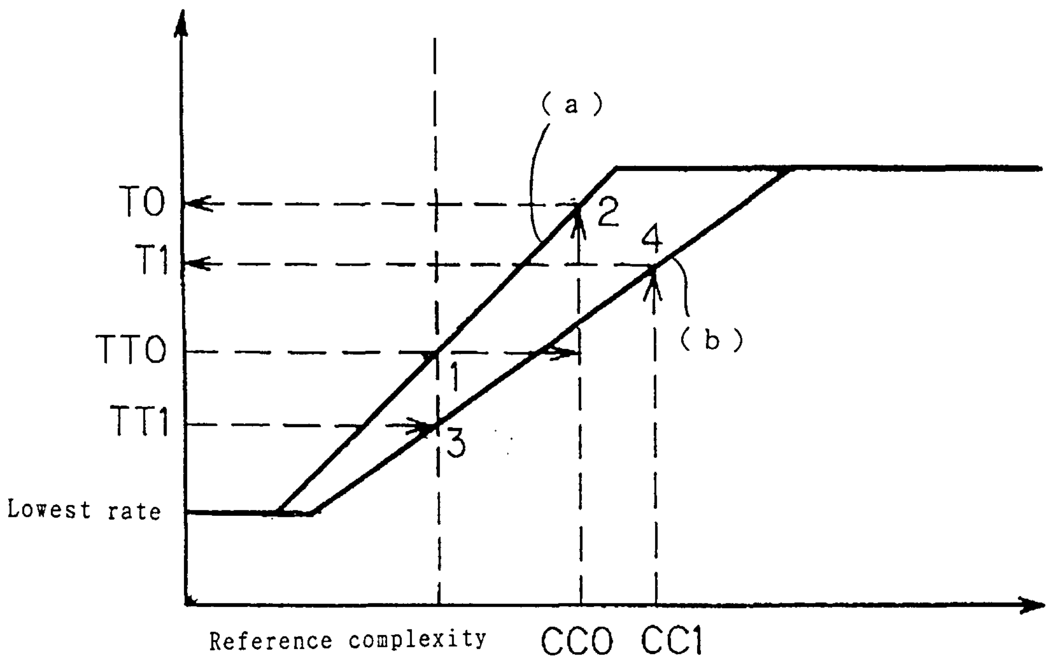
( a )
T0
2
4
T1
( b )
TT0
1
TT1
3
Lowest rate
Reference complexity
CC0
CC1

Fig. 8

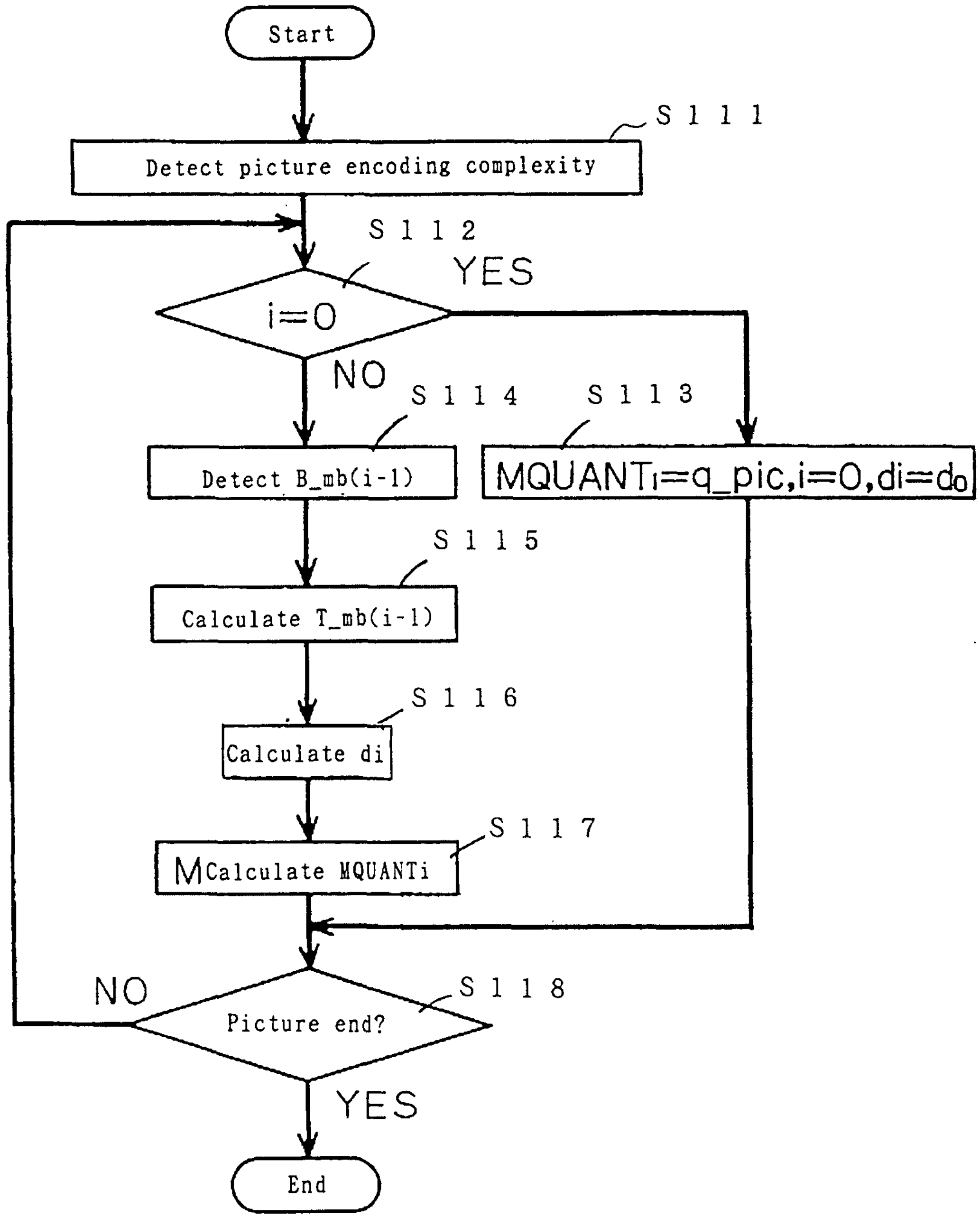
Start
S111
Detect picture encoding complexity
S112
i=0
YES
NO
S114
S113
Detect B_mb(i-1)
MQUANTi=q_pic,i=0,di=d0
S115
Calculate T_mb(i-1)
S116
Calculate di
S117
MCalculate MQUANTi
NO
S118
Picture end?
YES
End

Fig. 9

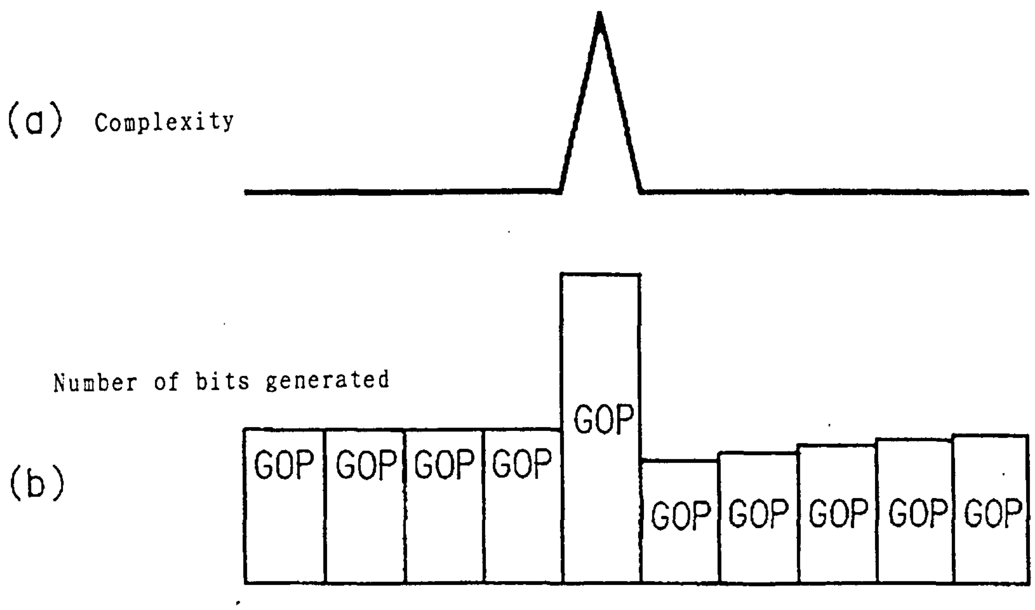
(a) Complexity
Number of bits generated
(b)
GOP
GOP
GOP
GOP
GOP
GOP
GOP
GOP
GOP
GOP

Fig. 10

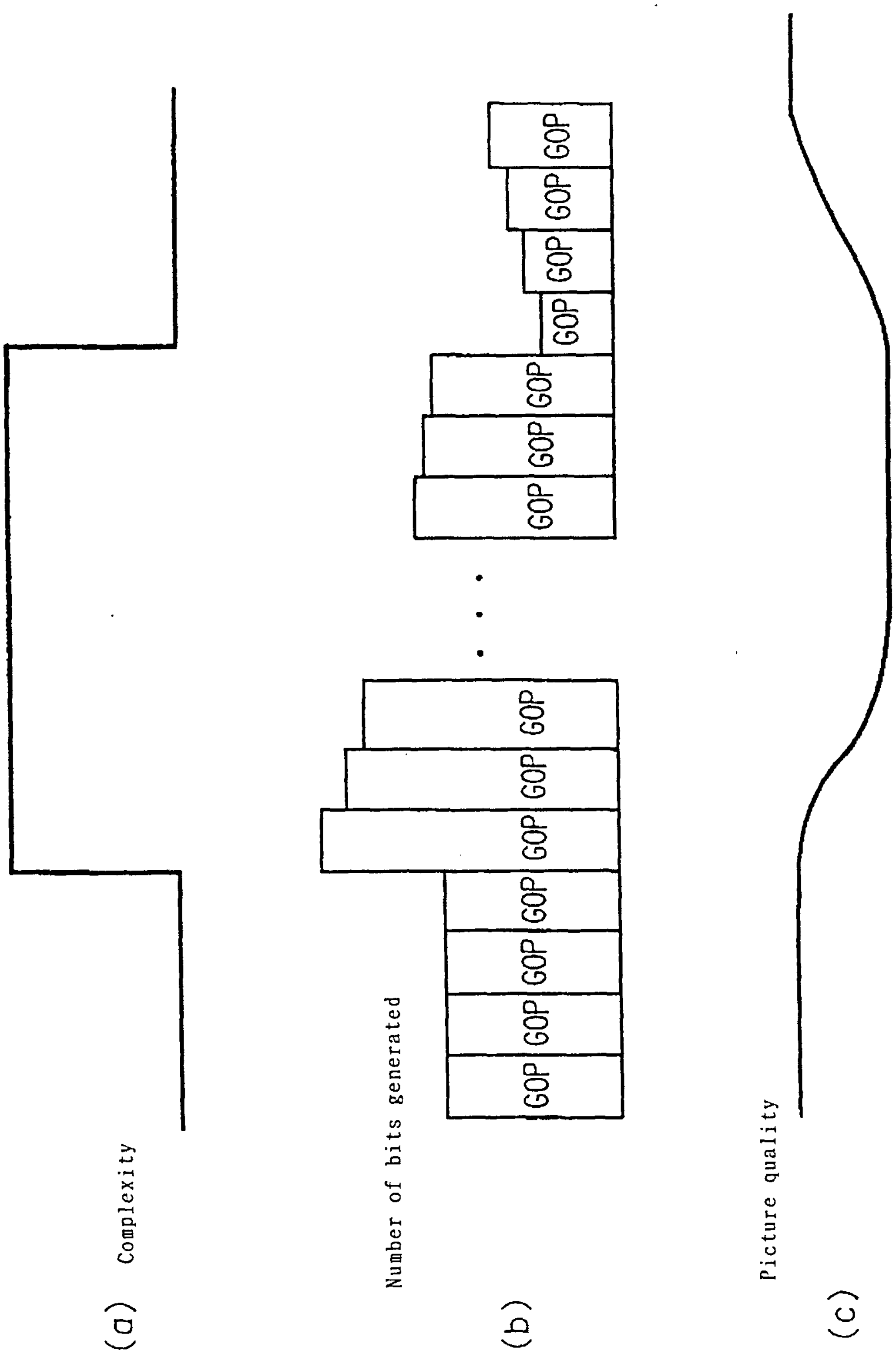
(a)
Complexity
(b)
Number of bits generated
GOP
(c)
Picture quality

Fig. 11

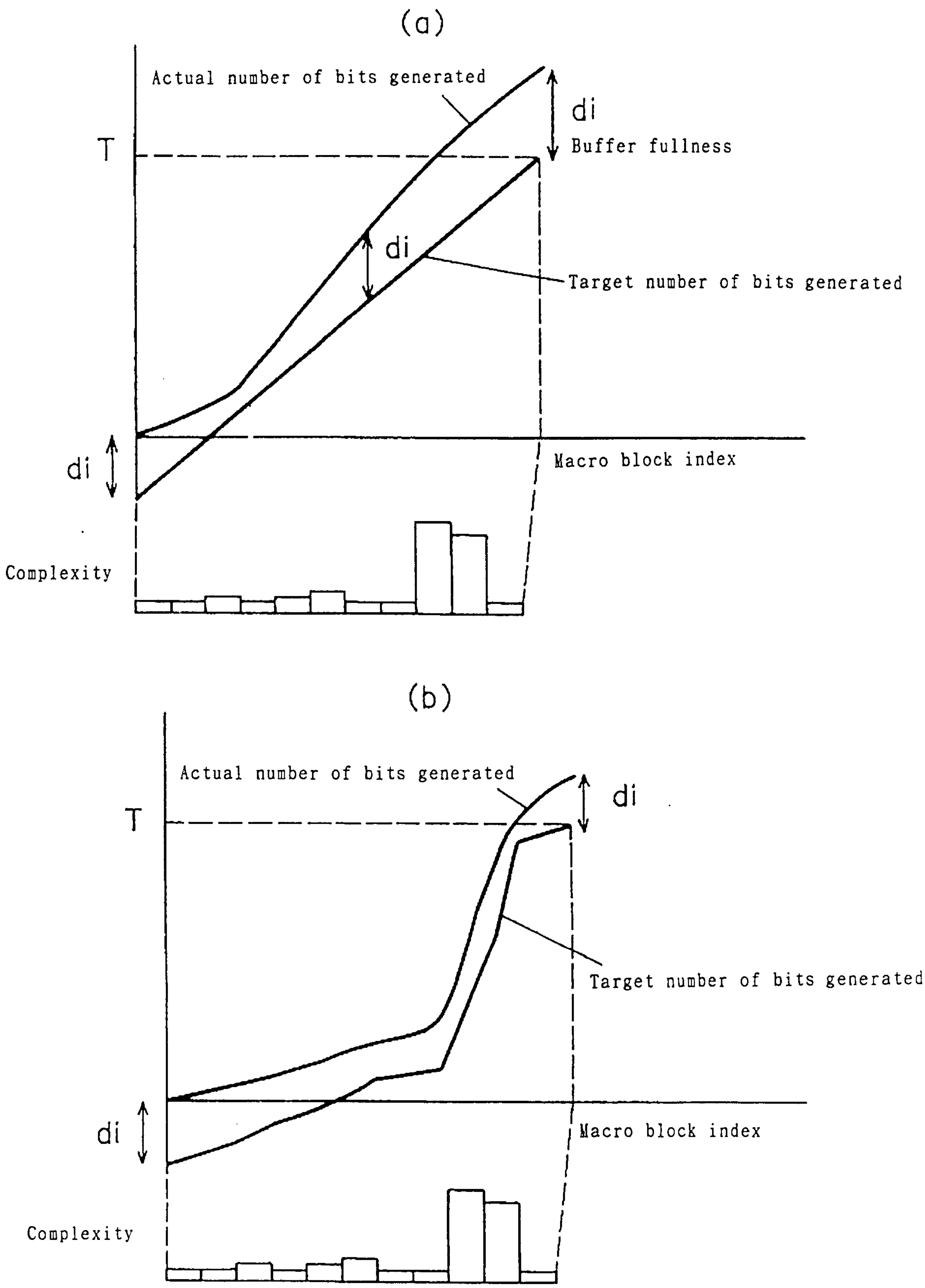
(a)
Actual number of bits generated
T
di
Buffer fullness
di
Target number of bits generated
di
Macro block index
Complexity
(b)
Actual number of bits generated
T
di
Target number of bits generated
di
Macro block index
Complexity

Fig. 12

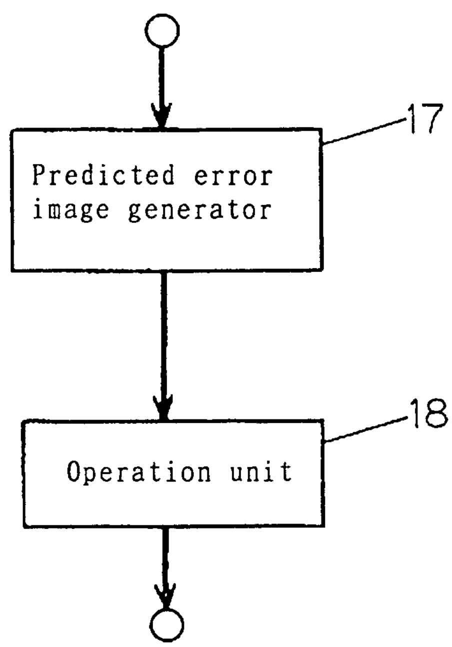

Fig. 13

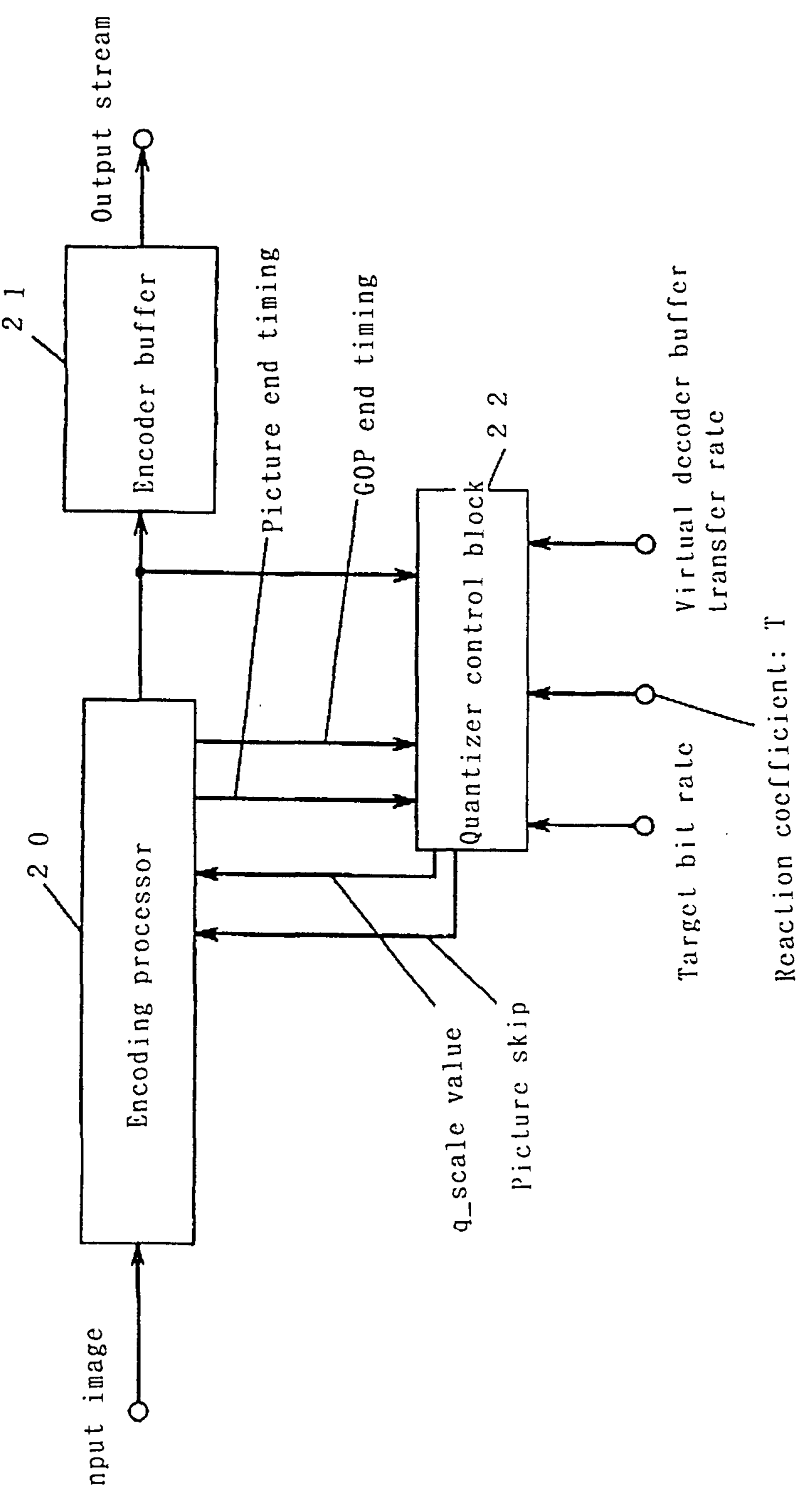
Input image
Encoding processor
2 0
Encoder buffer
2 1
Output stream
Picture end timing
GOP end timing
Quantizer control block
2 2
q_scale value
Picture skip
Virtual decoder buffer
transfer rate
Reaction coefficient: T
Target bit rate

Fig. 14

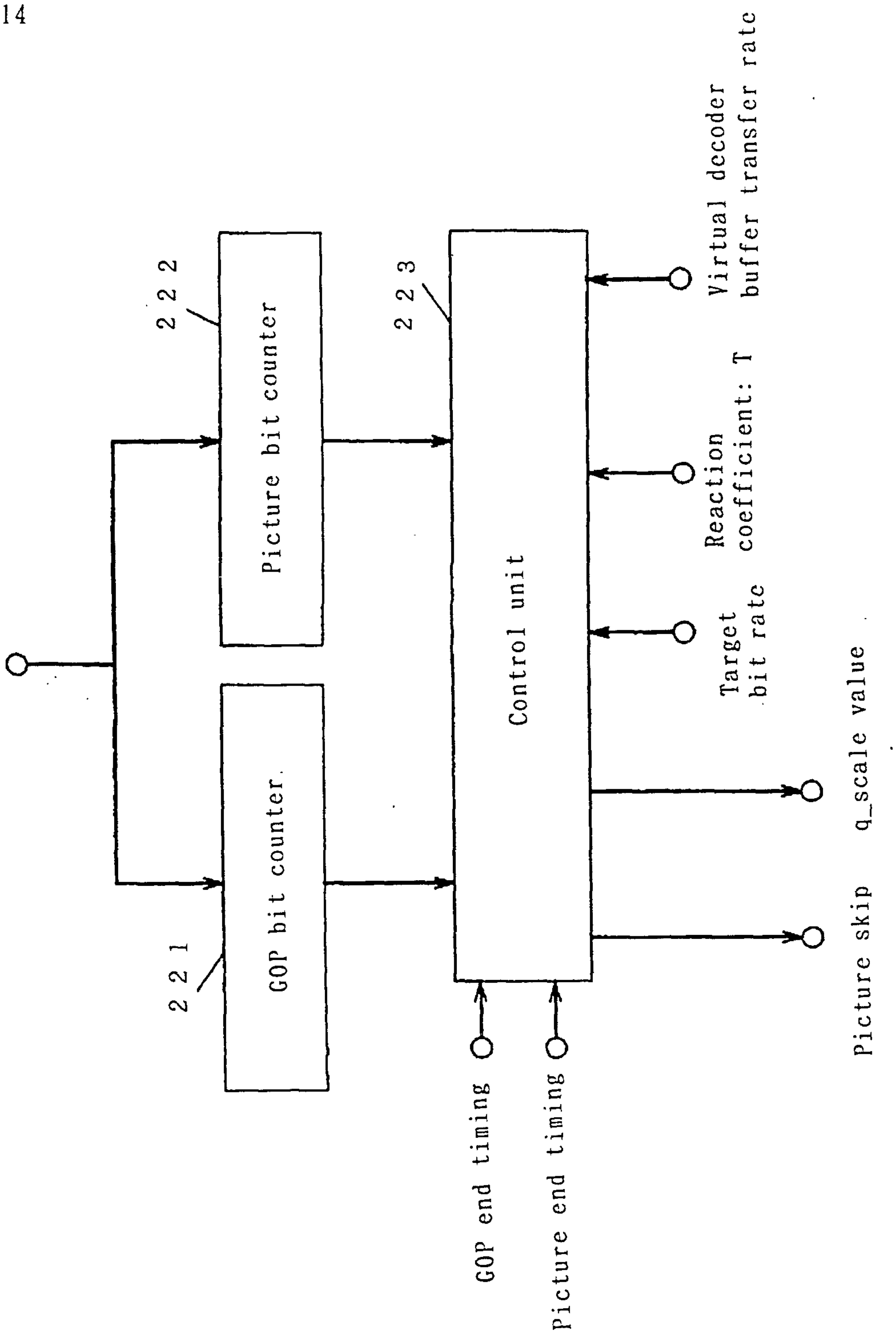
Virtual decoder
buffer transfer rate
Reaction
coefficient: T
Target
bit rate
q_scale value
Picture skip
Picture bit counter
Control unit
GOP bit counter
2 2 2
2 2 3
2 2 1
GOP end timing
Picture end timing

Fig. 15

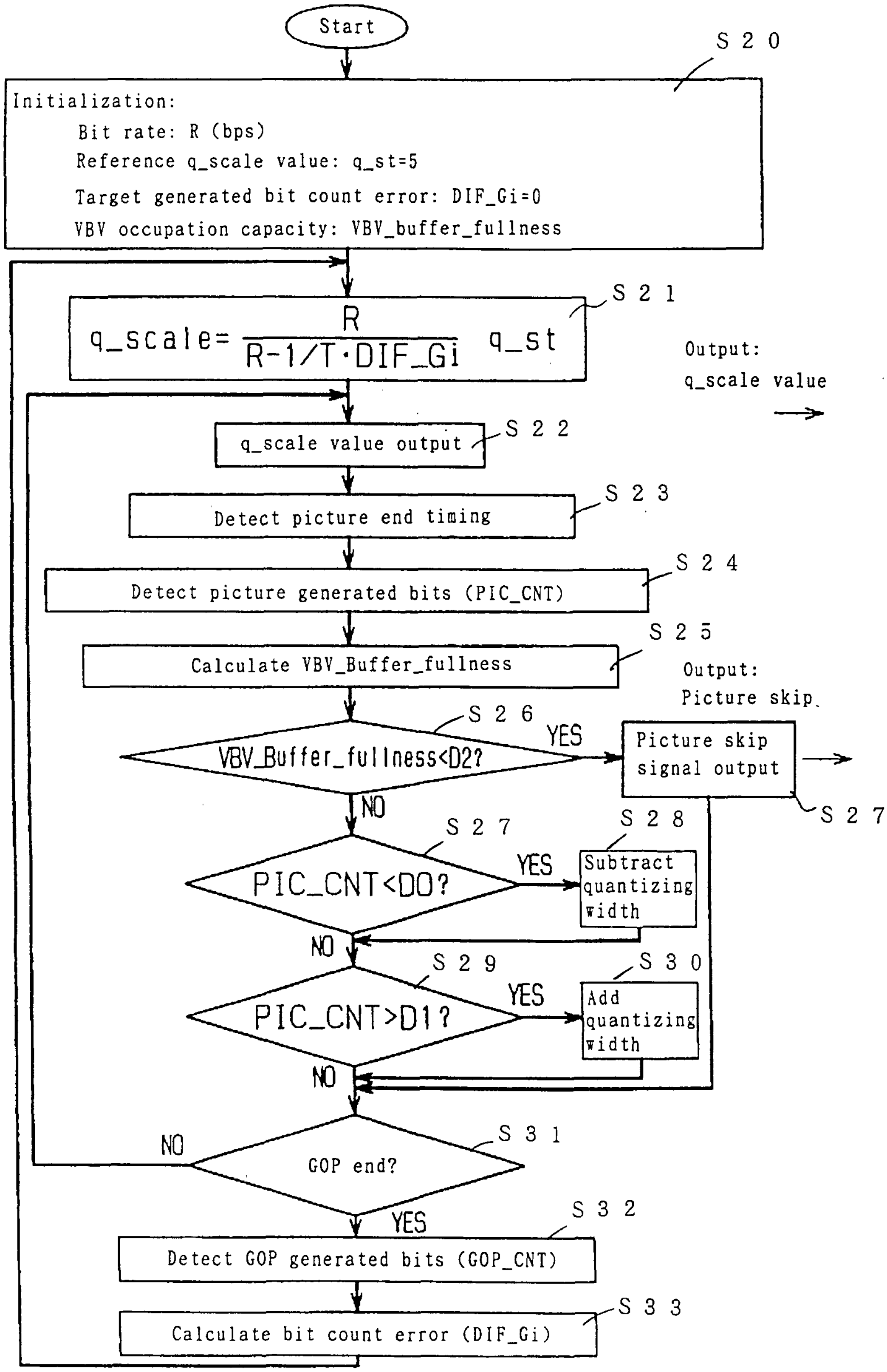
Start
S 2 0
Initialization:
Bit rate: R (bps)
Reference q_scale value: q_st=5
Target generated bit count error: DIF_Gi=0
VBV occupation capacity: VBV_buffer_fullness
S 2 1
q_scale= R / R-1/T·DIF_Gi q_st
Output:
q_scale value
q_scale value output
S 2 2
Detect picture end timing
S 2 3
Detect picture generated bits (PIC_CNT)
S 2 4
Calculate VBV_Buffer_fullness
S 2 5
Output:
Picture skip
S 2 6
VBV_Buffer_fullness<D2?
YES
Picture skip signal output
S 2 7
NO
S 2 7
PIC_CNT<D0?
YES
S 2 8
Subtract quantizing width
NO
S 2 9
PIC_CNT>D1?
YES
S 3 0
Add quantizing width
NO
S 3 1
GOP end?
NO
YES
S 3 2
Detect GOP generated bits (GOP_CNT)
S 3 3
Calculate bit count error (DIF_Gi)

Fig. 16

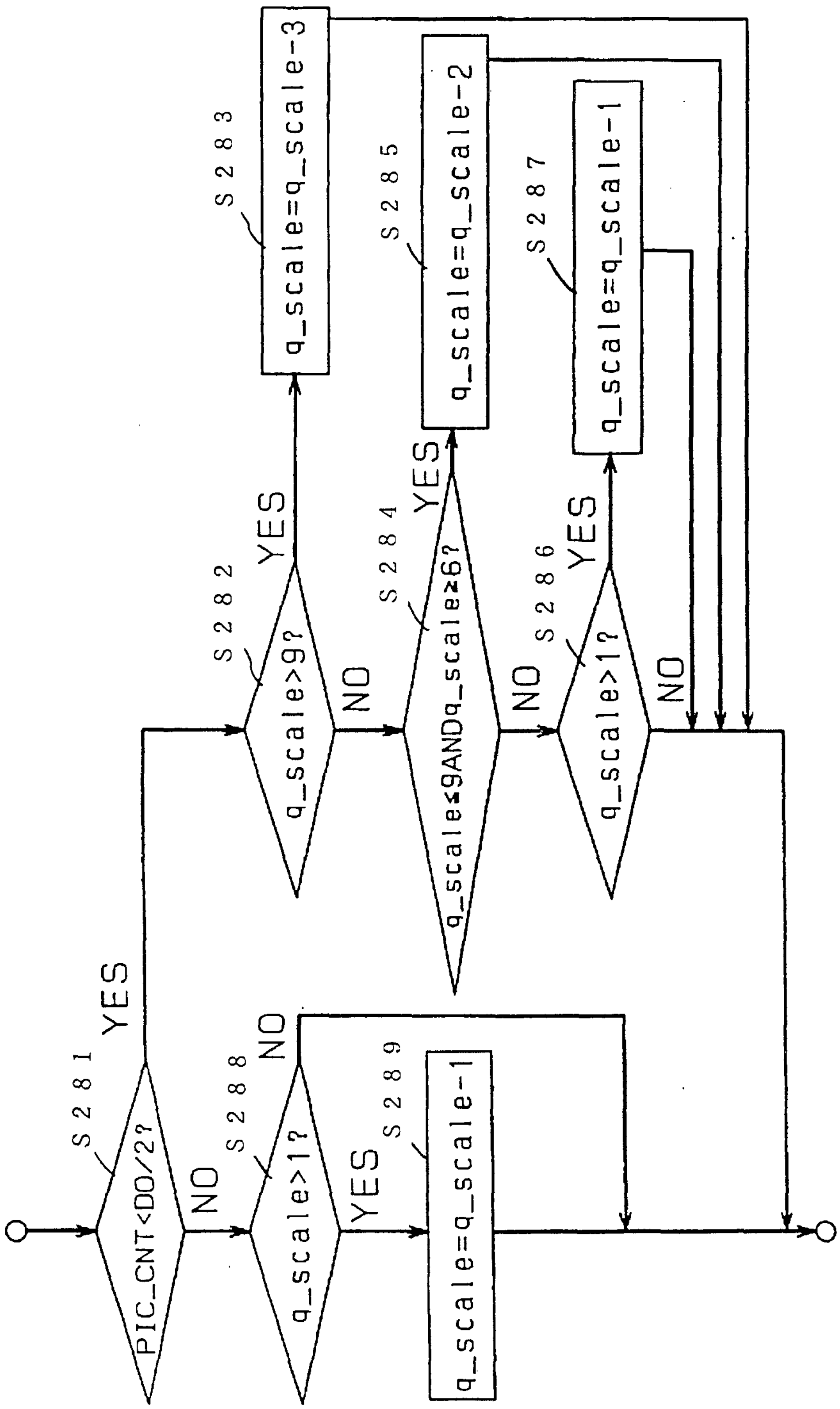
S281
PIC_CNT<DO/2?
YES
NO
S282
q_scale>9?
S283
q_scale=q_scale-3
S284
q_scale≤9ANDq_scale≥6?
S285
q_scale=q_scale-2
S286
q_scale>1?
S287
q_scale=q_scale-1
S288
q_scale>1?
S289
q_scale=q_scale-1
YES
NO
YES
NO
YES
NO
YES
NO

Fig. 17

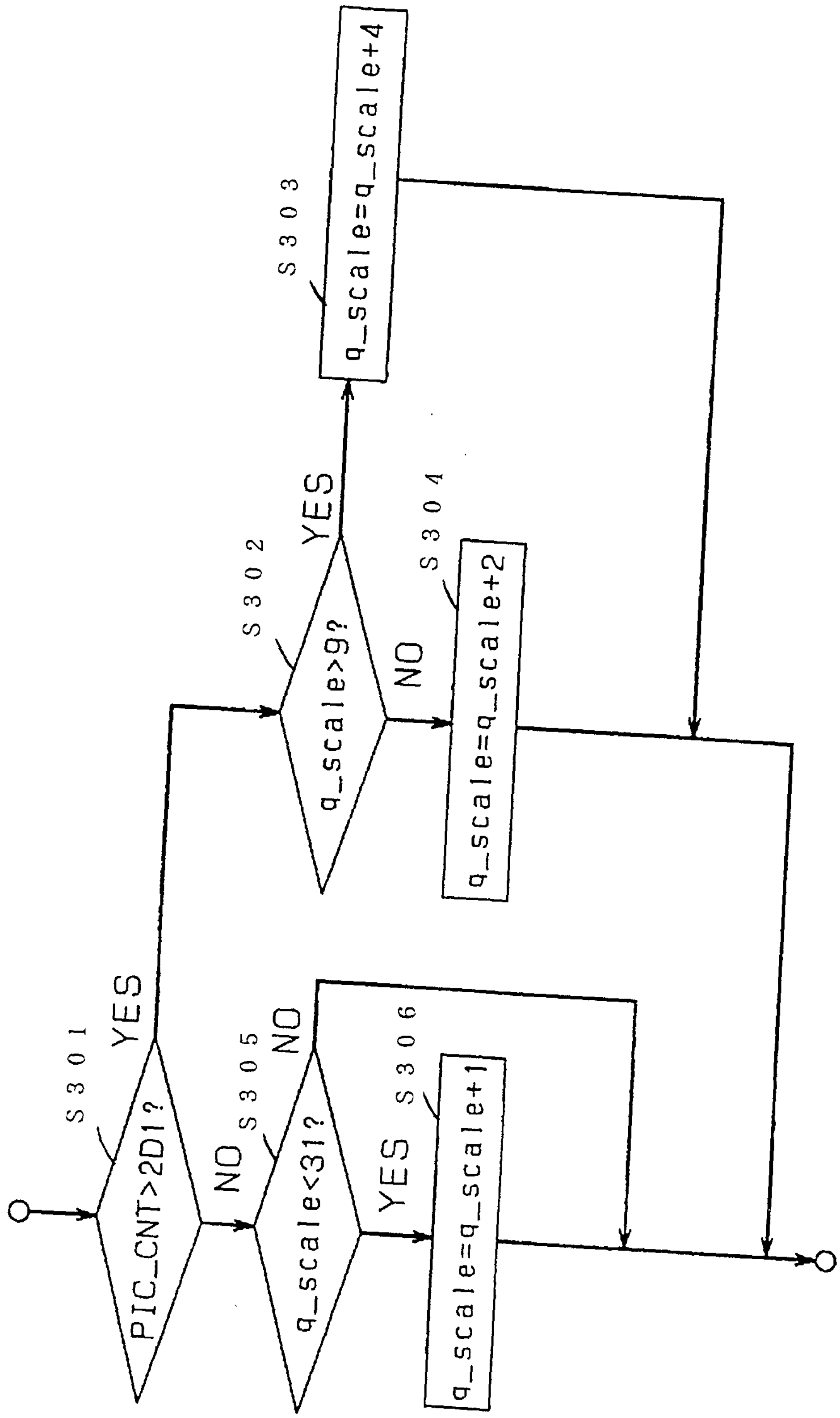
S301
PIC_CNT>2D1?
YES
NO
S302
q_scale>9?
YES
NO
S303
q_scale=q_scale+4
S304
q_scale=q_scale+2
S305
q_scale<31?
YES
NO
S306
q_scale=q_scale+1

Fig. 18

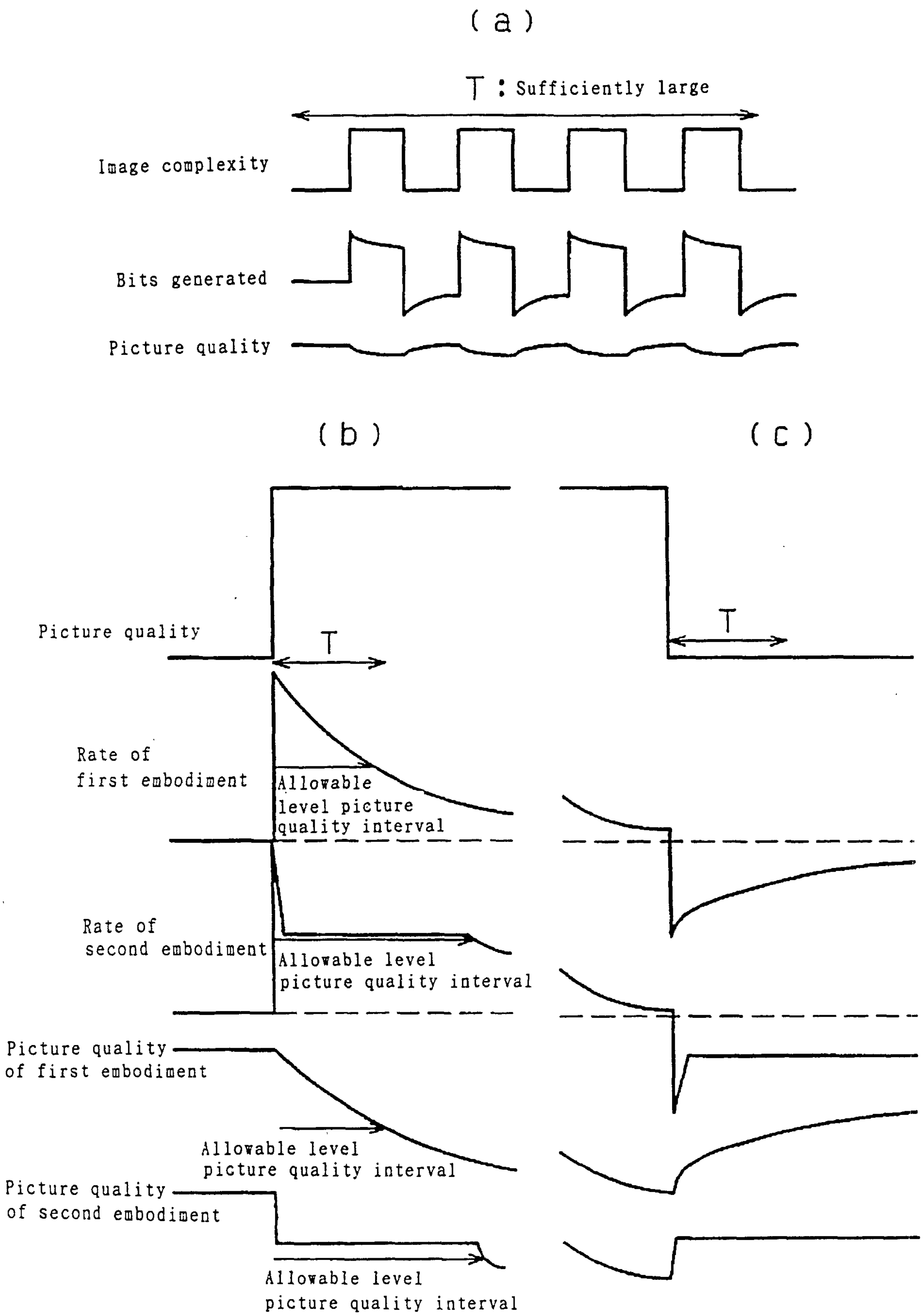
(a)
T : Sufficiently large
Image complexity
Bits generated
Picture quality
(b)
(c)
Picture quality
T
T
Rate of
first embodiment
Allowable
level picture
quality interval
Rate of
second embodiment
Allowable level
picture quality interval
Picture quality
of first embodiment
Allowable level
picture quality interval
Picture quality
of second embodiment
Allowable level
picture quality interval

Fig. 19

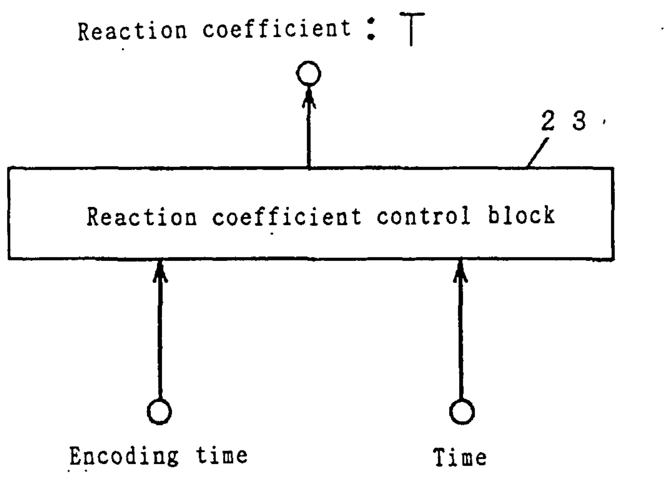
Reaction coefficient : T
2 3
Reaction coefficient control block
Encoding time
Time

Fig. 20

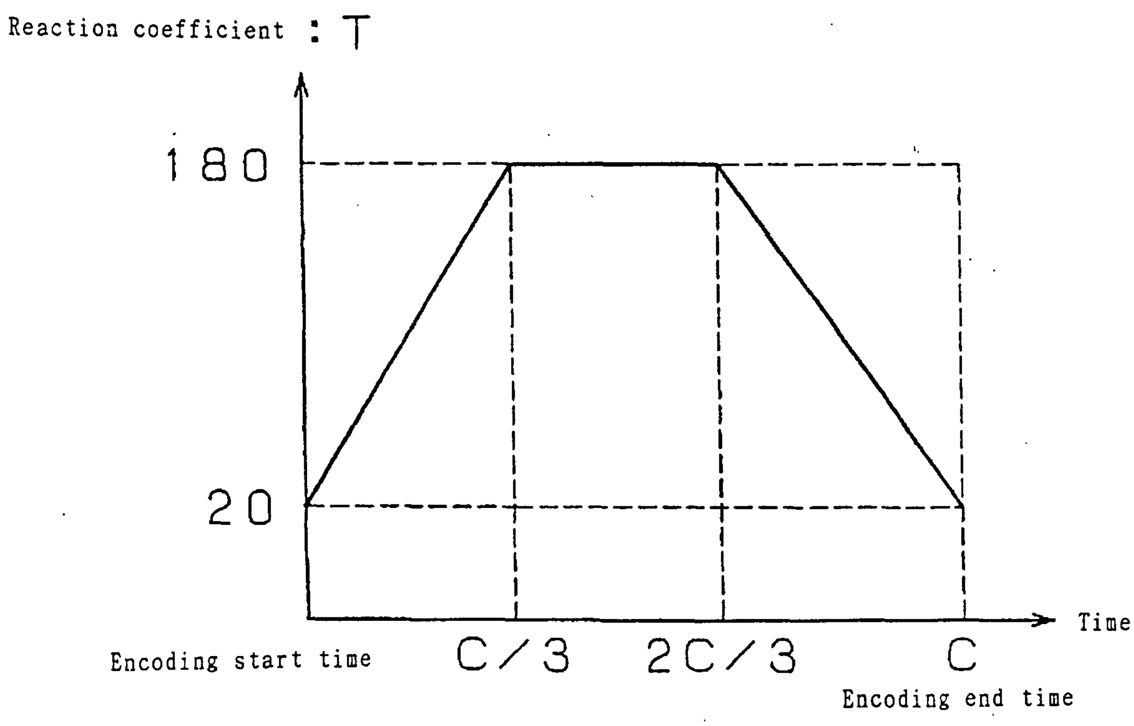
Reaction coefficient : T
180
20
Time
Encoding start time
C/3
2C/3
C
Encoding end time